(19) Europäisches Patentamt European Patent Office Office européen des brevets

(11) EP 3 825 364 A1

(12) EUROPEAN PATENT APPLICATION

(43) Date of publication:
26.05.2021 Bulletin 2021/21

(21) Application number: 20213646.1

(22) Date of filing: 15.03.2013

(51) Int Cl.:
C09D 5/04 (2006.01)　　　　C09D 7/43 (2018.01)
C09D 7/61 (2018.01)　　　　C09D 101/02 (2006.01)
C09D 101/28 (2006.01)　　　　C09D 17/00 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 19.04.2012 EP 12290139

(62) Document number(s) of the earlier application(s) in accordance with Art. 76 EPC:
13709247.4 / 2 838 961

(71) Applicant: FiberLean Technologies Limited
Par, Cornwall PL24 2SQ (GB)

(72) Inventors:
• Phipps, Jonathan
Par, Cornwall PL24 2SQ (GB)
• Bourgoin, Sophie
Par, Cornwall PL24 2SQ (GB)
• Legrix, Annabel Huguette Renée
Par, Cornwall PL24 2SQ (GB)
• Vinnicombe, Gemma
Par, Cornwall PL24 2SQ (GB)

(74) Representative: EDP Patent Attorneys B.V.
Bronland 12-E
6708 WH Wageningen (NL)

Remarks:
This application was filed on 14-12-2020 as a divisional application to the application mentioned under INID code 62.

(54) **COMPOSITIONS FOR PAINT**

(57) A paint composition comprising microfibrillated cellulose, binder and solvent. The microfibrillated cellulose is present in an amount ranging from about 0.1 % to about 10 % by weight based on the total weight of the paint composition.

**Description**

TECHNICAL FIELD

The present invention relates to a mill-base for paint including microfibrillated cellulose and optionally co-processed inorganic particulate material as pigment or extender, and to a paint composition comprising microfibrillated cellulose and optionally co-processed inorganic particulate material.

BACKGROUND

Paints, including water-based decorative paints, contain many ingredients. The main ingredients are pigments, such as $TiO_2$, and extenders such as kaolin, talc or calcium carbonate, which are added to generate light scattering and give the paint its whiteness and opacity, and in the case of coloured paints to provide strong, bright colours. These are accompanied by one or more binders, typically synthetic latex polymers, which bond to the pigments and extenders to provide a strong and coherent dried film. Other minor additives such as co-solvents, plasticisers, defoamers, biocides and rheology modifiers are also common. Conventional rheology modifiers, such as hydroxyethyl cellulose, are used to prevent the sedimentation of the pigments and extenders in the can, in order to give the product a long shelf life and to avoid the need for extensive and rigorous stirring prior to use, as well as to prevent the dripping of the paint once applied to a substrate. These additives give the paint a highly shear-thinning or pseudoplastic rheological profile; the paint is viscous or even semi-solid at rest but its viscosity is reduced substantially by the shearing action of a brush or roller so that it can be easily transferred from the can to the substrate. For example, a solution of up to 5% by weight hydroxyethyl cellulose in the makedown water of a paint is normally sufficient to impart the desired rheology to the paint formulation.

Hydroxyethyl cellulose (and related products such as carboxymethyl cellulose) is typically produced from a bleached chemical pulp source. However, its production requires reaction and dissolution of the cellulose in concentrated and caustic solutions, and is an inherently expensive paint component. Thus, there is a need for new and less-expensive rheology modifiers for paint, particularly those which may impart other benefits to the paint, such as improved whiteness, opacity, gloss and wet scrub resistance.

The present invention seeks to provide alternative and/or improved components such as rheology modifiers for paint products which may be incorporated in the paint in addition to or in replacement of conventional rheology modifiers such as hydroxyethyl cellulose whilst maintaining or even improving the physical/mechanical, optical and post-application properties of the paint product. As such, the present inventors have surprisingly found that a composition comprising microfibrillated cellulose and optionally a co-processed inorganic particulate material can be used as a rheology modifier in paint whilst maintaining or even improving the physical/mechanical, optical and/or post-application properties of the paint.

SUMMARY OF THE INVENTION

In accordance with a first aspect, there is provided a mill-base for paint, which comprises microfibrillated cellulose. The microfibrillated cellulose is present in an amount ranging from about 0.1 % to about 10 % by weight based on the total weight of a paint composition formulated from said mill base. In an embodiment, the mill-base further comprises co-processed inorganic particulate material as primary pigment and/or extender pigment, wherein said inorganic particulate material is co-processed with a fibrous substrate comprising cellulose during the preparation of said microfibrillated cellulose.

In accordance with a second aspect, there is provided a paint composition comprising microfibrillated cellulose, binder and solvent. The microfibrillated cellulose is present in an amount ranging from about 0.1 % to about 10 % by weight based on the total weight of the paint composition. In an embodiment, the paint composition is formulated from the mill-base of the first aspect of the invention.

According to a third aspect, the present invention is directed to the use of microfibrillated cellulose as disclosed herein as a rheology modifier in a mill-base for paint or paint composition.

According to a fourth aspect, the present invention is directed to the use of microfibrillated cellulose as disclosed herein as a replacement or partial replacement for conventional cellulose-derived rheology modifier in a mill-base for paint or paint composition.

According to a sixth aspect, there is provided a substrate coated with the paint composition of the second aspect of the invention.

According to a seventh aspect, there is provided a canned paint comprising the paint composition of the second aspect of the invention.

BRIEF DESCRIPTION OF THE FIGURES

Figure 1 shows the rheology profiles (viscosity as a function of shear rate) of various comparative and exemplary paint formulations.

Figure 2 shows the rheology profiles (viscosity as a function of shear rate) of further comparative and exemplary paint formulations.

DETAILED DESCRIPTION

The terms "mill-base" or "mill-base for paint" used herein means a composition which may be formulated into paint. A mill-base will typically comprise a portion of liquid paint components as well as primary pigment and optional extender pigment components, and other conventional additives as described later. Thus, a mill-base includes components of fully formulated paint, other than the majority of the solvent (e.g., water) and binder (e.g., a latex).

The terms "paint" or "formulated paint" or "fully formulated paint" used herein means a composition comprising primary pigment, optional extender pigment, solvent and binder, and other optional additives suitable for use in paint, which is in a form suitable for application to a substrate, e.g., an article of manufacture (e.g., a handy-craft item, piece of furniture or an automobile, and the like) or a surface, e.g., the surface of a constructional element (e.g., interior walls, ceilings and floors of a dwelling place), and the like.

By microfibrillating is meant a process in which microfibrils of cellulose are liberated or partially liberated as individual species or as smaller aggregates as compared to the fibres of the pre-microfibrillated pulp. Typical cellulose fibres (i.e., pre-microfibrillated pulp) include larger aggregates of hundreds or thousands of individual cellulose microfibrils. By microfibrillating the cellulose, particular characteristics and properties, including but not limited to the characteristic and properties described herein, are imparted to the microfibrillated cellulose and the compositions including the microfibrillated cellulose.

As used herein "co-processed inorganic particulate material" refers to inorganic particulate material produced by the methods for microfibrillating fibrous substrates comprising cellulose in the presence of an inorganic particulate material as described herein.

Unless otherwise stated, the particle size properties referred to herein for the inorganic particulate materials are as measured by the well known conventional method employed in the art of laser light scattering, using a Malvern Mastersizer S machine as supplied by Malvern Instruments Ltd (or by other methods which give essentially the same result). In the laser light scattering technique, the size of particles in powders, suspensions and emulsions may be measured using the diffraction of a laser beam, based on an application of Mie or Frauenhofer theory. Such a machine provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that $d_{50}$ value.

Alternatively, where stated, particle size properties referred to herein for the inorganic particulate materials are as measured in a well known manner by sedimentation of the particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value.

Unless otherwise stated, particle size properties of the microfibrillated cellulose materials are as measured by the well known conventional method employed in the art of laser light scattering, using a Malvern Mastersizer S machine as supplied by Malvern Instruments Ltd (or by other methods which give essentially the same result). Details of an exemplary procedure used to characterise the particle size distributions of mixtures of inorganic particle material and microfibrillated cellulose using a Malvern Mastersizer S machine are provided in WO-A-2010/131016 at page 40, line 32 to page 41, line 34.

*Mill-base*

The mill-base comprises microfibrillated cellulose, wherein the microfibrillated cellulose is present in an amount ranging from about 0.1 % to about 10 % by weight based on the total weight of a paint composition formulated from said mill-base and including solvent, binder and any other additives. Thus, based on the total weight of the mill-base, the microfibrillated cellulose may be present in amount of from about 0.1 to about 20 % by weight.

In an embodiment, the microfibrillated cellulose is present in an amount ranging from about 0.1 % to about 8 % by weight based on the total weight of a paint composition formulated from said mill base, for example, from about 0.1 % to about 6 % by weight, or from about 0.2 to about 5 % by weight, or from about 0.3 to about 5 % by weight, or from about 0.4 % to about 5 % by weight, or from about 0.4 % to about 4.5 % by weight, or from about 0.4 % to about 4 % by weight, or from about 0.4 % to about 3.5 % by weight, or from about 0.4 % to about 3 % by weight, or from about 0.4% to about 2.5 % by weight, or from about 0.4 % to about 2 % by weight.

Thus, based on the total weight of the mill-base, the microfibrillated cellulose may be present in an amount of from about 0.1 % to about 18 % by weight, for example, from about 0.2 % to about 16 % by weight, or from about 0.3 to about 14 % by weight, or from about 0.4 % to about 12 % by weight, or from about 0.5 % to about 10 % by weight, or from about 0.5 % to about 9 % by weight, or from about 0.5 % to about 8 % by weight, or from about 0.5 to about 7 % by weight, or from about 0.5 % to about 6 % by weight, or from about 0.5 % to about 5 % by weight, or from about 0.5 % to about 4 % by weight, or from about 0.5 % to about 3 % by weight.

The microfibrillated cellulose may be included as a rheology modifier.

In an embodiment, the microfibrillated cellulose is obtainable by a method comprising microfibrillating a fibrous substrate comprising cellulose in a suitable environment, advantageously an aqueous environment, by grinding in the presence of a grinding medium which is to be removed after the completion of grinding. The grinding is carried out in the absence of grindable inorganic particulate material. A grindable inorganic particulate material is a material which would be ground in the presence of the grinding medium. In an embodiment, the grinding is performed in a tower mill, a screened grinder, a stirred medial mill, or stirred media detritor. Suitable methods for preparing microfibrillated cellulose are described in WO-A-2010/131016, see in particular pages page 33, line 17 to page 40, line 24, the entire contents of which are hereby incorporated by reference.

The particulate grinding medium may be of a natural or a synthetic material. The grinding medium may, for example, comprise balls, beads or pellets of any hard mineral, ceramic or metallic material. Such materials may include, for example, alumina, zirconia, zirconium silicate, aluminium silicate or the mullite-rich material which is produced by calcining kaolinitic clay at a temperature in the range of from about 1300°C to about 1800°C. For example, in some embodiments a Carbolite® grinding media is preferred. Alternatively, particles of natural sand of a suitable particle size may be used.

Generally, the type of and particle size of grinding medium to be selected for use in the invention may be dependent on the properties, such as, e.g., the particle size of, and the chemical composition of, the feed suspension of material to be ground. Preferably, the particulate grinding medium comprises particles having an average diameter in the range of from about 0.5 mm to about 6 mm. In one embodiment, the particles have an average diameter of at least about 3 mm.

The grinding medium may comprise particles having a specific gravity of at least about 2.5. The grinding medium may comprise particles have a specific gravity of at least about 3, or least about 4, or least about 5, or at least about 6..

The grinding medium (or media) may be present in an amount up to about 70% by volume of the charge. The grinding media may be present in amount of at least about 10% by volume of the charge, for example, at least about 20 % by volume of the charge, or at least about 30% by volume of the charge, or at least about 40 % by volume of the charge, or at least about 50% by volume of the charge, or at least about 60 % by volume of the charge.

The mill-base may further comprise co-processed inorganic particulate material as pigment and/or extender. In this embodiment, the inorganic particulate material is co-processed with a fibrous substrate comprising cellulose during the preparation of said microfibrillated cellulose. In an advantageous embodiment, the microfibrillated cellulose is obtainable by a method comprising microfibrillating a fibrous substrate comprising cellulose in a suitable environment, advantageously an aqueous environment, in the presence of said inorganic particulate material. In a further embodiment, the microfibrillating step comprises grinding the fibrous substrate comprising cellulose in the presence of the inorganic particulate material. The grinding may be performed in a tower mill, a screened grinder, a stirred media mill or a stirred media detritor. Suitable methods for preparing microfibrillated cellulose in the presence of an inorganic particulate material are described in WO-A-2010/131016, see in particular page 9, line 19 to page 22, line 12, the entire contents of which are hereby incorporated by reference.

In this embodiment, a particulate grinding medium may be present. As described above, by grinding medium is meant a medium other than the inorganic particulate material which is co-ground with the fibrous substrate comprising cellulose. The particulate grinding medium, when present, may be of a type, form and size as described above in connection with the embodiment in which grinding is carried out in the absence of grindable inorganic particulate material.

The fibrous substrate comprising cellulose may be derived from any suitable source, such as wood, grasses (e.g., sugarcane, bamboo) or rags (e.g., textile waste, cotton, hemp or flax). The fibrous substrate comprising cellulose may be in the form of a pulp (i.e., a suspension of cellulose fibres in water), which may be prepared by any suitable chemical or mechanical treatment, or combination thereof. For example, the pulp may be a chemical pulp, or a chemithermomechanical pulp, or a mechanical pulp, or a recycled pulp, or a papermill broke, or a papermill waste stream, or waste from a papermill, or a combination thereof. The cellulose pulp may be beaten (for example in a Valley beater) and/or otherwise refined (for example, processing in a conical or plate refiner) to any predetermined freeness, reported in the art as Canadian standard freeness (CSF) in $cm^3$. CSF means a value for the freeness or drainage rate of pulp measured by the rate that a suspension of pulp may be drained. For example, the cellulose pulp may have a Canadian standard freeness of about 10 $cm^3$ or greater prior to being microfibrillated. The cellulose pulp may have a CSF of about 700 $cm^3$ or less, for example, equal to or less than about 650 $cm^3$, or equal to or less than about 600 $cm^3$, or equal to or less than about 550 $cm^3$, or equal to or less than about 500 $cm^3$, or equal to or less than about 450 $cm^3$, or equal to or less than about 400 $cm^3$, or equal to or less than about 350 $cm^3$, or equal to or less than about 300 $cm^3$, or equal to or less than about 250 $cm^3$, or equal to or less than about 200 $cm^3$, or equal to or less than about 150 $cm^3$, or equal to or less than about 100 $cm^3$, or equal to or less than about 50 $cm^3$. The cellulose pulp may then be dewatered by methods well known in the art, for example, the pulp may be filtered through a screen in order to obtain a wet sheet comprising at least about 10% solids, for example at least about 15% solids, or at least about 20% solids, or at least about 30% solids, or at least about 40% solids. The pulp may be utilised in an unrefined state; that is to say without being beaten or dewatered, or otherwise refined.

The fibrous substrate comprising cellulose may be added to a grinding vessel or homogenizer in a dry state. For example, a dry paper broke may be added directly to the grinder vessel. The aqueous environment in the grinder vessel will facilitate the formation of a pulp.

The grinding may be carried out in one or more stages. For example, a coarse inorganic particulate material may be ground in the grinder vessel to a predetermined particle size distribution, after which the fibrous material comprising cellulose is added and the grinding continued until the desired level of microfibrillation has been obtained.

In one embodiment, the mean particle size ($d_{50}$) of the inorganic particulate material is reduced during the co-grinding process. For example, the $d_{50}$ of the inorganic particulate material may be reduced by at least about 10%, for example, the $d_{50}$ of the inorganic particulate material may be reduced by at least about 20%, or reduced by at least about 30%, or reduced by at least about 40%, or reduced by at least about 50%, or reduced by at least about 60%, or reduced by at least about 70%, or reduced by at least about 80%, or reduced by at least about 90%. For example, an inorganic particulate material having a $d_{50}$ of 2.5 $\mu$m prior to co-grinding and a $d_{50}$ of 1.5 $\mu$m post co-grinding will have been subject to a 40% reduction in particle size. In embodiments, the mean particle size of the inorganic particulate material is not significantly reduced during the co-grinding process. By 'not significantly reduced' is meant that the $d_{50}$ of the inorganic particulate material is reduced by less than about 10%, for example, the $d_{50}$ of the inorganic particulate material is reduced by less than about 5%.

The fibrous substrate comprising cellulose may be microfibrillated in the presence of an inorganic particulate material to obtain microfibrillated cellulose having a $d_{50}$ ranging from about 5 to $\mu$m about 500 $\mu$m, as measured by laser light scattering. The fibrous substrate comprising cellulose may be microfibrillated in the presence of an inorganic particulate material to obtain microfibrillated cellulose having a $d_{50}$ of equal to or less than about 400 $\mu$m, for example equal to or less than about 300 $\mu$m, or equal to or less than about 200 $\mu$m, or equal to or less than about 150 $\mu$m, or equal to or less than about 125 $\mu$m, or equal to or less than about 100 $\mu$m, or equal to or less than about 90 $\mu$m, or equal to or less than about 80 $\mu$m, or equal to or less than about 70 $\mu$m, or equal to or less than about 60 $\mu$m, or equal to or less than about 50 $\mu$m, or equal to or less than about 40 $\mu$m, or equal to or less than about 30 $\mu$m, or equal to or less than about 20 $\mu$m, or equal to or less than about 10 $\mu$m.

The fibrous substrate comprising cellulose may be microfibrillated in the presence of an inorganic particulate material to obtain microfibrillated cellulose having a modal fibre particle size ranging from about 0.1-500 $\mu$m and a modal inorganic particulate material particle size ranging from 0.25-20 $\mu$m. The fibrous substrate comprising cellulose may be microfibrillated in the presence of an inorganic particulate material to obtain microfibrillated cellulose having a modal fibre particle size of at least about 0.5 $\mu$m, for example at least about 10 $\mu$m, or at least about 50 $\mu$m, or at least about 100 $\mu$m, or at least about 150 $\mu$m, or at least about 200 $\mu$m, or at least about 300 $\mu$m, or at least about 400 $\mu$m.

The fibrous substrate comprising cellulose may be microfibrillated in the presence of an inorganic particulate material to obtain microfibrillated cellulose having a fibre steepness equal to or greater than about 10, as measured by Malvern. Fibre steepness (i.e., the steepness of the particle size distribution of the fibres) is determined by the following formula:

$$\text{Steepness} = 100 \times (d_{30}/d_{70})$$

The microfibrillated cellulose may have a fibre steepness equal to or less than about 100. The microfibrillated cellulose may have a fibre steepness equal to or less than about 75, or equal to or less than about 50, or equal to or less than about 40, or equal to or less than about 30. The microfibrillated cellulose may have a fibre steepness from about 20 to about 50, or from about 25 to about 40, or from about 25 to about 35, or from about 30 to about 40.

The grinding is suitably performed in a grinding vessel, such as a tumbling mill (e.g., rod, ball and autogenous), a stirred mill (e.g., SAM or IsaMill), a tower mill, a stirred media detritor (SMD), or a grinding vessel comprising rotating parallel grinding plates between which the feed to be ground is fed.

The fibrous substrate comprising cellulose and inorganic particulate material may be present in the aqueous environment at an initial solids content of at least about 4 wt %, of which at least about 2 % by weight is fibrous substrate comprising cellulose. The initial solids content may be at least about 10 wt%, or at least about 20 wt %, or at least about 30 wt %, or at least about at least 40 wt %. At least about 5 % by weight of the initial solids content may be fibrous substrate comprising cellulose, for example, at least about 10 %, or at least about 15 %, or at least about 20 % by weight of the initial solids content may be fibrous substrate comprising cellulose.

As the suspension of material to be ground may be of a relatively high viscosity, a suitable dispersing agent may preferably be added to the suspension prior to grinding. The dispersing agent may be, for example, a water soluble condensed phosphate, polysilicic acid or a salt thereof, or a polyelectrolyte, for example a water soluble salt of a poly(acrylic acid) or of a poly(methacrylic acid) having a number average molecular weight not greater than 80,000. The amount of the dispersing agent used would generally be in the range of from 0.1 to 2.0% by weight, based on the weight of the dry inorganic particulate solid material. The suspension may suitably be ground at a temperature in the range of from 4°C to 100°C.

Other additives which may be included during the microfibrillation step include: carboxymethyl cellulose, amphoteric carboxymethyl cellulose, oxidising agents, 2,2,6,6-Tetramethylpiperidine-1-oxyl (TEMPO), TEMPO derivatives, and wood degrading enzymes.

The pH of the suspension of material to be ground may be about 7 or greater than about 7 (i.e., basic), for example, the pH of the suspension may be about 8, or about 9, or about 10, or about 11. The pH of the suspension of material to be ground may be less than about 7 (i.e., acidic), for example, the pH of the suspension may be about 6, or about 5, or about 4, or about 3. The pH of the suspension of material to be ground may be adjusted by addition of an appropriate amount of acid or base. Suitable bases included alkali metal hydroxides, such as, for example NaOH. Other suitable bases are sodium carbonate and ammonia. Suitable acids included inorganic acids, such as hydrochloric and sulphuric acid, or organic acids. An exemplary acid is orthophosphoric acid.

The amount of inorganic particulate material and cellulose pulp in the mixture to be co-ground may vary in a ratio of from about 99.5:0.5 to about 0.5:99.5, based on the dry weight of inorganic particulate material and the amount of dry fibre in the pulp, for example, a ratio of from about 99.5:0.5 to about 50:50 based on the dry weight of inorganic particulate material and the amount of dry fibre in the pulp. For example, the ratio of the amount of inorganic particulate material and dry fibre may be from about 99.5:0.5 to about 70:30. In an embodiment, the ratio of inorganic particulate material to dry fibre is about 80:20, or for example, about 85:15, or about 90:10, or about 91:9, or about 92:8, or about 93:7, or about 94:6, or about 95:5, or about 96:4, or about 97:3, or about 98:2, or about 99:1. In a preferred embodiment, the weight ratio of inorganic particulate material to dry fibre is about 95:5. In another preferred embodiment, the weight ratio of inorganic particulate material to dry fibre is about 90:10. In another preferred embodiment, the weight ratio of inorganic particulate material to dry fibre is about 85:15. In another preferred embodiment, the weight ratio of inorganic particulate material to dry fibre is about 80:20.

The total energy input in a typical grinding process to obtain the desired aqueous suspension composition may typically be between about 100 and 1500 kWht$^{-1}$ based on the total dry weight of the inorganic particulate filler. The total energy input may be less than about 1000 kWht$^{-1}$, for example, less than about 800 kWht$^{-1}$, less than about 600 kWht$^{-1}$, less than about 500 kWht$^{-1}$, less than about 400 kWht$^{-1}$, less than about 300 kWht$^{-1}$, or less than about 200 kWht$^{-1}$. As will be apparent, the total energy input per tonne of dry fibre in the fibrous substrate comprising cellulose will be less than about 10,000 kWht$^{-1}$, for example, less than about 9000 kWht$^{-1}$, or less than about 8000 kWht$^{-1}$, or less than about 7000 kWht$^{-1}$, or less than about 6000 kWht$^{-1}$, or less than about 5000 kWht$^{-1}$, for example less than about 4000 kWht$^{-1}$, less than about 3000 kWht$^{-1}$, less than about 2000 kWht$^{-1}$, less than about 1500 kWht$^{-1}$, less than about 1200 kWht$^{-1}$, less than about 1000 kWht$^{-1}$, or less than about 800 kWht$^{-1}$. The total energy input varies depending on the amount of dry fibre in the fibrous substrate being microfibrillated, and optionally the speed of grind and the duration of grind.

Alternatively, or additionally, microfibrillation of the fibrous substrate comprising cellulose may be effected under wet conditions in the presence of the inorganic particulate material by a method in which the mixture of cellulose pulp and inorganic particulate material is pressurized (for example, to a pressure of about 500 bar) and then passed to a zone of lower pressure. The rate at which the mixture is passed to the low pressure zone is sufficiently high and the pressure of the low pressure zone is sufficiently low as to cause microfibrillation of the cellulose fibres. For example, the pressure drop may be effected by forcing the mixture through an annular opening that has a narrow entrance orifice with a much larger exit orifice. The drastic decrease in pressure as the mixture accelerates into a larger volume (i.e., a lower pressure zone) induces cavitation which causes microfibrillation. In an embodiment, microfibrillation of the fibrous substrate comprising cellulose may be effected in a homogenizer under wet conditions in the presence of the inorganic particulate material. In the homogenizer, the cellulose pulp-inorganic particulate material mixture is pressurized (for example, to a pressure of about 500 bar), and forced through a small nozzle or orifice. The mixture may be pressurized to a pressure of from about 100 to about 1000 bar, for example to a pressure of equal to or greater than 300 bar, or equal to or greater than about 500, or equal to or greater than about 200 bar, or equal to or greater than about 700 bar. The homogenization subjects the fibres to high shear forces such that as the pressurized cellulose pulp exits the nozzle or orifice, cavitation causes microfibrillation of the cellulose fibres in the pulp. Additional water may be added to improve flowability of the suspension through the homogenizer. The resulting aqueous suspension comprising microfibrillated cellulose and inorganic particulate material may be fed back into the inlet of the homogenizer for multiple passes through the homogenizer. The inorganic particulate material may be a naturally platy mineral, such as kaolin. As such, homogenization not only facilitates microfibrillation of the cellulose pulp, but also facilitates delamination of the platy particulate material.

A platy particulate material, such as kaolin, is understood to have a shape factor of at least about 10, for example, at least about 15, or at least about 20, or at least about 30, or at least about 40, or at least about 50, or at least about 60, or at least about 70, or at least about 80, or at least about 90, or at least about 100. Shape factor, as used herein, is a measure of the ratio of particle diameter to particle thickness for a population of particles of varying size and shape as measured using the electrical conductivity methods, apparatuses, and equations described in U.S. Patent No. 5,576,617, which is incorporated herein by reference.

A suspension of a platy inorganic particulate material, such as kaolin, may be treated in the homogenizer to a predetermined particle size distribution in the absence of the fibrous substrate comprising cellulose, after which the fibrous material comprising cellulose is added to the aqueous slurry of inorganic particulate material and the combined suspension is processed in the homogenizer as described above. The homogenization process is continued, including one or more passes through the homogenizer, until the desired level of microfibrillation has been obtained. Similarly, the platy inorganic particulate material may be treated in a grinder to a predetermined particle size distribution and then combined with the fibrous material comprising cellulose followed by processing in the homogenizer. An exemplary homogenizer is a Manton Gaulin (APV) homogenizer.

After the microfibrillation step has been carried out, the aqueous suspension comprising microfibrillated cellulose and inorganic particulate material may be screened to remove fibre above a certain size and to remove any grinding medium. For example, the suspension can be subjected to screening using a sieve having a selected nominal aperture size in order to remove fibres which do not pass through the sieve. Nominal aperture size means the nominal central separation of opposite sides of a square aperture or the nominal diameter of a round aperture. The sieve may be a BSS sieve (in accordance with BS 1796) having a nominal aperture size of 150$\mu$m, for example, a nominal aperture size 125$\mu$m, or 106$\mu$m, or 90$\mu$m, or 74$\mu$m, or 63$\mu$m, or 53$\mu$m, 45$\mu$m, or 38$\mu$m. In one embodiment, the aqueous suspension is screened using a BSS sieve having a nominal aperture of 125$\mu$m. The aqueous suspension may then be optionally dewatered.

In certain embodiments, the microfibrillated cellulose is obtained by grinding the fibrous substrate comprising cellulose in the presence of a grinding medium, and optionally in the presence of an inorganic particulate material, to obtain said microfibrillated cellulose, for example, microfibrillated cellulose having a a fibre steepness equal to or greater than about 10, as measured by Malvern, as described above, or from about 20 to about 50, and then the microfibrillated cellulose (optionally including co-processed inorganic particulate material) is further treated in a homogenizer under wet conditions. In the homogenizer, the microfibrillated cellulose is pressurized (for example, to a pressure of about 500 bar), and forced through a small nozzle or orifice. The mixture may be pressurized to a pressure of from about 100 to about 1000 bar, for example to a pressure of equal to or greater than 300 bar, or equal to or greater than about 500, or equal to or greater than about 200 bar, or equal to or greater than about 700 bar. Additional water may be added to improve flowability of the suspension through the homogenizer. The resulting aqueous suspension comprising microfibrillated cellulose and optional inorganic particulate material may be fed back into the inlet of the homogenizer for multiple passes through the homogenizer.

For use in the mill-base of the present invention, the microfibrillated cellulose and co-processed inorganic particulate material may be provided in the form of an aqueous slurry or damp pressed cake.

In embodiments in which the microfibrillation is conducted in the absence of grindable inorganic particulate material, the fibrous substrate comprising cellulose may be microfibrillated to obtain microfibrillated cellulose having a $d_{50}$ ranging from about 5 to $\mu$m about 500 $\mu$m, as measured by laser light scattering. The fibrous substrate comprising cellulose may be microfibrillated to obtain microfibrillated cellulose having a $d_{50}$ of equal to or less than about 400 $\mu$m, for example equal to or less than about 300 $\mu$m, or equal to or less than about 200 $\mu$m, or equal to or less than about 150 $\mu$m, or equal to or less than about 125 $\mu$m, or equal to or less than about 100 $\mu$m, or equal to or less than about 90 $\mu$m, or equal to or less than about 80 $\mu$m, or equal to or less than about 70 $\mu$m, or equal to or less than about 60 $\mu$m, or equal to or less than about 50 $\mu$m, or equal to or less than about 40 $\mu$m, or equal to or less than about 30 $\mu$m, or equal to or less than about 20 $\mu$m, or equal to or less than about 10 $\mu$m.

The fibrous substrate comprising cellulose may be microfibrillated to obtain microfibrillated cellulose having a modal fibre particle size ranging from about 0.1-500 $\mu$m. The fibrous substrate comprising cellulose may be microfibrillated to obtain microfibrillated cellulose having a modal fibre particle size of at least about 0.5 $\mu$m, for example at least about

10 μm, or at least about 50 μm, or at least about 100 μm, or at least about 150 μm, or at least about 200 μm, or at least about 300 μm, or at least about 400 μm.

The fibrous substrate comprising cellulose may be microfibrillated to obtain microfibrillated cellulose having a fibre steepness equal to or greater than about 10, as measured by Malvern. Fibre steepness (i.e., the steepness of the particle size distribution of the fibres) is determined by the following formula:

$$\text{Steepness} = 100 \times (d_{30}/d_{70})$$

The microfibrillated cellulose may have a fibre steepness equal to or less than about 100. The microfibrillated cellulose may have a fibre steepness equal to or less than about 75, or equal to or less than about 50, or equal to or less than about 40, or equal to or less than about 30. The microfibrillated cellulose may have a fibre steepness from about 20 to about 50, or from about 25 to about 40, or from about 25 to about 35, or from about 30 to about 40.

As noted above, the grinding is performed in the presence of a grinding medium. In an embodiment, the grinding medium is a coarse media comprising particles having an average diameter in the range of from about 1 mm to about 6 mm, for example about 2 mm, or about 3 mm, or about 4 mm, or about 5 mm.

In another embodiment, the grinding media has a specific gravity of at least about 2.5, for example, at least about 3, or at least about 3.5, or at least about 4.0, or at least about 4.5, or least about 5.0, or at least about 5.5, or at least about 6.0.

As described above, the grinding medium (or media) may be in an amount up to about 70% by volume of the charge. The grinding media may be present in amount of at least about 10% by volume of the charge, for example, at least about 20 % by volume of the charge, or at least about 30% by volume of the charge, or at least about 40 % by volume of the charge, or at least about 50% by volume of the charge, or at least about 60 % by volume of the charge.

In one embodiment, the grinding medium is present in amount of about 50% by volume of the charge.

By 'charge' is meant the composition which is the feed fed to the grinder vessel. The charge includes water, grinding media, the fibrous substrate comprising cellulose and any other optional additives (other than as described herein).

The fibrous substrate comprising cellulose may be present in an aqueous environment at an initial solids content of at least about 1 wt %. The fibrous substrate comprising cellulose may be present in the aqueous environment at an initial solids content of at least about 2 wt %, for example at least about 3 wt %, or at least about at least 4 wt %. Typically the initial solids content will be no more than about 10 wt%.

For use in the mill-base of the present invention, the microfibrillated cellulose prepared in the absence of grindable inorganic particulate material may be provided in the form of an aqueous slurry or damp pressed cake.

*- co-processed inorganic particulate material*

In accordance with the present invention, the co-processed inorganic particulate material may be included in the mill-base and paint composition as primary pigment or extender pigment (as described later).

The inorganic particulate material may, for example, be an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite or diatomaceous earth, or magnesium hydroxide, or aluminium trihydrate, or combinations thereof. The inorganic particulate material may also be a conventional mineral pigment, such as titanium dioxide, calcium sulphate and iron oxide, preferably titanium dioxide.

In an embodiment, the inorganic particulate material is an alkaline earth metal carbonate, for example, calcium carbonate. The inorganic particulate material may be ground calcium carbonate (GCC) or precipitated calcium carbonate (PCC), or a mixture of GCC and PCC. In another embodiment, the inorganic particulate material is a naturally platy mineral, for example, kaolin. The inorganic particulate material may be a mixture of kaolin and calcium carbonate, for example, a mixture of kaolin and GCC, or a mixture of kaolin and PCC, or a mixture of kaolin, GCC and PCC. The particulate calcium carbonate used in the present invention may be obtained from a natural source by grinding. Ground calcium carbonate (GCC) is typically obtained by crushing and then grinding a mineral source such as chalk, marble or limestone, which may be followed by a particle size classification step, in order to obtain a product having the desired degree of fineness. Other techniques such as bleaching, flotation and magnetic separation may also be used to obtain a product having the desired degree of fineness and/or colour. The particulate solid material may be ground autogenously, i.e. by attrition between the particles of the solid material themselves, or, alternatively, in the presence of a particulate grinding medium comprising particles of a different material from the calcium carbonate to be ground. These processes may be carried out with or without the presence of a dispersant and biocides, which may be added at any stage of the process.

Precipitated calcium carbonate (PCC) may be used as the source of particulate calcium carbonate in the present invention, and may be produced by any of the known methods available in the art. TAPPI Monograph Series No 30, "Paper Coating Pigments", pages 34-35 describes the three main commercial processes for preparing precipitated calcium carbonate which is suitable for use in preparing products for use in the paper industry, but may also be used in the practice of the present invention. In all three processes, a calcium carbonate feed material, such as limestone, is first calcined to produce quicklime, and the quicklime is then slaked in water to yield calcium hydroxide or milk of lime. In the first process, the milk of lime is directly carbonated with carbon dioxide gas. This process has the advantage that no byproduct is formed, and it is relatively easy to control the properties and purity of the calcium carbonate product. In the second process the milk of lime is contacted with soda ash to produce, by double decomposition, a precipitate of calcium carbonate and a solution of sodium hydroxide. The sodium hydroxide may be substantially completely separated from the calcium carbonate if this process is used commercially. In the third main commercial process the milk of lime is first contacted with ammonium chloride to give a calcium chloride solution and ammonia gas. The calcium chloride solution is then contacted with soda ash to produce by double decomposition precipitated calcium carbonate and a solution of sodium chloride. The crystals can be produced in a variety of different shapes and sizes, depending on the specific reaction process that is used. The three main forms of PCC crystals are aragonite, rhombohedral and scalenohedral, all of which are suitable for use in the present invention, including mixtures thereof.

Wet grinding of calcium carbonate involves the formation of an aqueous suspension of the calcium carbonate which may then be ground, optionally in the presence of a suitable dispersing agent. Reference may be made to, for example, EP-A-614948 (the contents of which are incorporated by reference in their entirety) for more information regarding the wet grinding of calcium carbonate.

Kaolin clay used in this invention may be a processed material derived from a natural source, namely raw natural kaolin clay mineral. The processed kaolin clay may typically contain at least about 50% by weight kaolinite. For example, most commercially processed kaolin clays contain greater than about 75% by weight kaolinite and may contain greater than about 90%, in some cases greater than about 95% by weight of kaolinite.

Kaolin clay used in the present invention may be prepared from the raw natural kaolin clay mineral by one or more other processes which are well known to those skilled in the art, for example by known refining or beneficiation steps.

For example, the clay mineral may be bleached with a reductive bleaching agent, such as sodium hydrosulfite. If sodium hydrosulfite is used, the bleached clay mineral may optionally be dewatered, and optionally washed and again optionally dewatered, after the sodium hydrosulfite bleaching step.

The clay mineral may be treated to remove impurities, e. g. by flocculation, flotation, or magnetic separation techniques well known in the art. Alternatively the clay mineral used in the first aspect of the invention may be untreated in the form of a solid or as an aqueous suspension.

The process for preparing the particulate kaolin clay used in the present invention may also include one or more comminution steps, e.g., grinding or milling. Light comminution of a coarse kaolin is used to give suitable delamination thereof. The comminution may be carried out by use of beads or granules of a plastic (e. g. nylon), sand or ceramic grinding or milling aid. The coarse kaolin may be refined to remove impurities and improve physical properties using well known procedures. The kaolin clay may be treated by a known particle size classification procedure, e.g., screening and centrifuging (or both), to obtain particles having a desired $d_{50}$ value or particle size distribution. The particle size distribution of the inorganic particulate materials will be that which is suitable for use in paint. Suitable particle sizes are described below in connection with the primary pigment and extender pigment.

In one embodiment, the inorganic particulate material used during the microfibrillating step may have a particle size distribution in which at least about 10% by weight of the particles have an e.s.d of less than 2 $\mu$m, for example, at least about 20% by weight, or at least about 30% by weight, or at least about 40% by weight, or at least about 50% by weight, or at least about 60% by weight, or at least about 70% by weight, or at least about 80% by weight, or at least about 90% by weight, or at least about 95% by weight, or about 100% of the particles have an e.s.d of less than 2 $\mu$m.

The amount of co-processed inorganic particulate material in the paint composition of the present invention may range from about 0.1 to about 30 % by weight, based on the total weight of the paint composition. In embodiments, the amount of co-processed inorganic particulate material in the paint composition may be from about 0.2 to about 20 % by weight, for example, from about 0.2 to about 10% by weight, for example, from about 0.2 to about 5 % by weight, for example, from about 0.3 to about 5 % by weight, for example, from about 0.4 to about 4 % by weight, for example, from about 0.4 to about 3 % by weight, or from about 0.4 to about 2 % by weight.

Advantageously, the co-processed inorganic particulate material is suitable for use as primary pigment or extender pigment, which means the amount of primary pigment and/or extender pigment that would otherwise have been added separately to the mill-base may be reduced. In one embodiment, the co-processed inorganic particulate constitutes all of the primary pigment and/or extender pigment comprised in the mill-base and/or paint composition of the present invention.

*- primary pigment and extender pigment*

In another embodiment, the mill-base comprises primary pigment and/or extender pigment, other than the co-processed inorganic particulate material described above. A primary pigment is that which provides the primary colouration of a paint, whether white or a colour shade. The term includes finely ground, natural or synthetic, inorganic or organic, insoluble dispersed particles which, when dispersed in a liquid vehicle, i.e., solvent, may provide, in addition to colour, many of the desired properties of paint, such as opacity, hardness, durability and corrosion resistance. Extender pigments are the filler used in paints. Extender pigments generally do not hide as well as primary pigments and their presence may affect the overall characteristics and performance of a paint. Primary pigment is generally more expensive than extender pigment.

Thus, by way of example, the mill-base may comprise titanium dioxide as primary pigment, optionally co-processed calcium carbonate as extender pigment, and other inorganic particulate material as extender pigment, such as calcium carbonate, kaolin and/or talc, which is not derived from the processes disclosed herein for preparing microfibrillated cellulose.

Suitable primary pigment include, but are not limited to, titanium dioxide, carbon black, calcium sulphate, iron oxide, and the copper-complex phthalo blue. Other suitable primary pigments for providing colour will be readily apparent to persons skilled in the art.

Extender pigments include, but are not limited to, an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite, feldspars, nepheline syenite, wollastonite, diatomaceous earth, barite, glass, and natural or synthetic silica or silicates. The mill-base and paint composition may include one or more or a mixture of the aforementioned extender pigments.

For paint applications in which a lesser degree of whiteness and/or lower opacity may be tolerated or even desired, an extender pigment such as, for example, calcium carbonate, may be utilised as a primary pigment.

In one embodiment, the mean particle size ($d_{50}$) of the primary pigment and/or extender pigment (and the co-processed inorganic particulate material described above) may be from about 0.1 $\mu$m to about 20 $\mu$m, as determined by Sedigraph. For example, the $d_{50}$ may be from about 0.2 $\mu$m to about 15 $\mu$m, or from about 0.3 $\mu$m to about 12 $\mu$m, or from about 0.4 $\mu$m to about 10 $\mu$m, or form about 0.6 $\mu$m to about 10 $\mu$m, or from about 0.8 $\mu$m to about 10 $\mu$m, or from about 1 $\mu$m to about 10 $\mu$m, or from about 1.5 $\mu$m to about 10 $\mu$m, or from about 2 $\mu$m to about 10 $\mu$m, or from about 2.5 to about 10 $\mu$m. The $d_{50}$ of the primary pigment and/or extender pigment may be up to about 9 $\mu$m, for example, up to about 8 $\mu$m, or up to about 7 $\mu$m, or up to about 6 $\mu$m, or up to about 5 $\mu$m, or up to about 4 $\mu$m, or up to about 3 $\mu$m, or up to about 2 $\mu$m.

In an embodiment, the primary pigment is titanium dioxide, for example, rutile $TiO_2$ or anatase $TiO_2$. Titanium oxide may be prepared from the mineral ilmenite, or rutile ore. The particles of titanium oxide may be coated, for example, with alumina, silica and/or zirconia. Advantageously, the titanium oxide has an oil absorption in the range from about 10 to about 30 cm$^3$/100 g pigment, for example, about 20 cm$^3$/100 g pigment, as determined in accordance with ISO 787/11 (palette knife method). Advantageously, the mill-base comprises one or more of the aforementioned primary pigments, advantageously titanium dioxide, and one or more of, or advantageously all of, kaolin, calcium carbonate and talc as extender pigment.

The kaolin may be a hydrous kaolin may have a $d_{50}$ of from about 0.2 $\mu$m to about 10 $\mu$m, for example, from about 0.3 $\mu$m to about 5 $\mu$m, or from about 0.4 $\mu$m to about 5 $\mu$m, or from about 0.4 $\mu$m to about 3.5 $\mu$m, as determined by Sedigraph. The kaolin may have an oil absorption (ISO 787/5) of from about 30 to about 50 g oil/100g pigment.

The calcium carbonate may have a $d_{50}$ of from about 0.5 $\mu$m to 12 $\mu$m, for example, from about 0.8 $\mu$m to about 10 $\mu$m, as determined by Sedigraph. The calcium carbonate may have an oil absorption of from about 15 to about 30 (ISO 787/5). In certain embodiments, the mill base or paint composition may comprise a mixture of coarse and fine calcium carbonate. For example, a mixture of calcium carbonate having a $d_{50}$ of from about 0.5 to about 4 $\mu$m, for example, from about 1.0 to about 3 $\mu$m, and calcium carbonate having a $d_{50}$ of from about 5 to about 8 $\mu$m, for example, from about 5.5 to about 7 $\mu$m.

The talc may have a $d_{50}$ of from about 1 $\mu$m to about 15 $\mu$m, for example, from about 1 to about 12 $\mu$m, or from about 1 to about 10 $\mu$m, or from about 1 to about 9 $\mu$m, or from about 2 to about 12 $\mu$m, or from about 5 to about 12 $\mu$m, as determined by Sedigraph. The talc may have an oil absorption of from about 30 to about 80 (ISO 787/5). In certain embodiments, the amount of talc in the paint composition is from about 0.1 about 10 wt. %, for example, from about 0.5 to about 8 wt. %, or from about 2 to about 8 wt. %, or from about 4 wt. %. In certain embodiments, for example, embodiments in which the paint comprises a mixture or fine and coarse calcium carbonate, as described above, the amount of talc in the paint composition is from about 0.1 to about 4 wt. %, for example, from about 1.0 to about 3 wt. %.

The amount of primary pigment in the paint composition of the invention formulated from the mill-base may be from about 1 % to about 50 % by weight, based on the total weight of the paint composition. In an embodiment, the amount of primary pigment is from about 5 % to 40 % by weight, or from about 5 % to about 30 % by weight, or from about 5 % to about 20 % by weight, or from about 5 % to about 15 % by weight, or from about 6 % to about 12 % by weight, or from about 8 % to about 12 % by weight, based on the total weight of the paint composition.

The total amount of extender pigment in the paint composition of the invention formulated from the mill-base may be from about 1 % to about 60 % by weight, based on the total weight of the paint composition. In an embodiment, the amount of extender pigment is from about 1 % to about 50 % by weight, or from about 5 % to about 40 % by weight, or from about 10 % to about 40 % by weight, or from about 15 % to about 40 % by weight, or from about 15 % to about 35 % by weight, or from about 20 % to about 35 % by weight, or from about 25 % to about 35 % by weight, based on the total weight of the paint composition.

The total amount of primary pigment, extender pigment and co-processed inorganic particulate material in the paint composition of the invention formulated from the mill-base may be from about 2% to about 80% by weight, based on the total weight of the paint composition. In an embodiment, the amount of extender pigment is from about 5 % to 70 % by weight, or from about 10 % to about 70 % by weight, or from about 15 % to about 70 % by weight, or from about 15 % to about 60 % by weight, or from about 20 % to about 50 % by weight, or from about 25 % to about 45 % by weight, or from about 30 % to about 60 % by weight, or from about 40 % to about 50 % by wieght, based on the total weight of the paint composition.

*- rheology modifiers*

The mill-base and paint composition may comprise rheology modifier other than said microfibrillated cellulose. Said other rheology modifier may be a cellulose-derived rheology modifier, for example, hydroxymethyl cellulose, hydroxyethyl cellulose, hydroxypropyl cellulose, hydroxypropylmethyl cellulose, carboxymethyl cellulose or a mixture thereof. In a further embodiment, the mill-base and paint composition (optionally formulated from said mill-base), is free of cellulose-derived rheology modifier other than said microfibrillated cellulose. Thus, in embodiments the weight ratio of said microfibrillated cellulose to cellulose-derived rheology modifier other than said microfibrillated cellulose is from about oo to about 1:5, for example, from about 1000:1 to about 1:4, or from about 100:1 to about 1:4, or from about 10:1 to about 1:4, or from about 1000:1 to about 1:3, or from about 1000:1 to about 1:2, or from about 1000:1 to about 1:1, or from about 1000:1 to about 3:2, or from about 1000:1 to about 3:1, or from about 1000:1 to about 4:1, or from about 1000:1 to about 5:1. In other embodiments, the weight ratio of said microfibrillated cellulose to cellulose-derived rheology modifier other than said microfibrillated cellulose is about 1:5, or about 1:4, or about 1:3, or about 1:2, or about 1:1, or about 2:1, or about 3:2, or about 3:1, or about 4:1, or about 5:1, or about 6:1, or about 7:1, or about 8:1, or about 9:1, or about 10:1, or about 20:1, or about 50:1, or about 100:1, or about 1000:1.

In a further embodiment, the mill base or paint composition comprises non-cellulose-derived rheology modifier. Such rheology modifiers include one or more of acrylic associative thickeners, polyacrylates, emulsion copolymers, dicyanamide, triols, polyoxyethylene ether, urea, sulphated castor oil, polyvinyl pyrrolidone, sodium alginate, xanthan gum, sodium silicate and acrylic acid copolymers. Such non-cellulose derived rheology modifier may be present in amount up to about 5 % by weight based on the total weight of the paint composition, for example, from about 0.1 to about 4 % by weight, or from about 0.2 to about 3 % by weight, or from about 0.2 to about 2 % by weight based on the total weight of the paint composition.

In an embodiment, the mill-base or paint composition (optionally formulated from said mill-base), does not contain microfibrillated cellulose which is produced by at least partly enzymatic treatment of cellulose fibers.

*Paint composition*

In accordance with the second aspect, the paint composition comprises microfibrillated cellulose as disclosed herein, binder and solvent, wherein the microfibrillated cellulose is present in an amount ranging from 0.1 % to 10 % by weight based on the total weight of the paint composition.

In an embodiment, the paint composition further comprises co-processed inorganic particulate material, as disclosed herein, as primary pigment and/or extender pigment, wherein said inorganic particulate material is co-processed with a fibrous substrate comprising cellulose during the preparation of said microfibrillated cellulose. In another embodiment, the paint composition further comprises primary pigment and/or extender pigment as disclosed herein, other than the co-processed inorganic particulate material.

In embodiment, the microfibrillated cellulose is obtainable by the methods disclosed herein comprising microfibrillating a fibrous substrate comprising cellulose in an aqueous environment by grinding in the presence of a grinding medium which is to be removed after the completion of grinding, wherein the grinding is carried out in the absence of grindable inorganic particulate material.

In an embodiment, the microfibrillated cellulose is obtainable by the methods disclosed herein comprising microfibrillating a fibrous substrate comprising cellulose in an aqueous environment in the presence of said inorganic particulate material. The microfibrillating step may comprise grinding the fibrous substrate comprising cellulose in the presence of the inorganic particulate material

In an embodiment, the paint composition is formulated from the mill-base of the first aspect of the invention and embodiments thereof.

The paint may be formulated as a decorative paint, including matt and gloss paints, an industrial paint, including protective paints and paints for sanitation, and the like, and other paints such as paints for identification, e.g., signage, and the like. Advantageously, the paint is a water-based paint, for example, a water-based decorative paint, for example, water-based decorative matt paint.

The solvent is any suitable substance which can act as a carrier for the pigment and binder. Once on the substrate being painted, the solvent evaporates through drying and/or curing and leaves behind a dry paint film on the painted substrate. In embodiment, the solvent comprises water and optional dispersing chemicals. Organic solvents include mineral spirits, e.g., white sprits, petroleum distillate, esters, glycol ethers, and the like.

The amount of solvent in the paint composition will vary depending on the particular form of paint and its intended use. In an embodiment, the amount of solvent is present in an amount of from about 5 % to about 90 % by weight, based on the total weight of the paint composition. For example, the amount of solvent may be from about 10 % to about 90 % by weight, or from about 15 % to about 90 % by weight, or from about 20 % to about 90 % by weight, or from about 25 % to about 90 % by weight, or from about 30 % to about 90 % by weight, or from about 35 % to about 90 % by weight or from about 40 % to about 90 % by weight, of from about 10 % to about 80 % by weight, of from about 20 % to about 80 % by weight, or from about 30 % to about 80 % by weight, or from about 30 % to about 70 % by weight, or from about 30 % to about 60 % by weight, or from about 40 % to about 60 % by weight, or from about 5 % to about 80 % by weight, or from about 5 % to about 70 % by weight, or from about 5 % to about 60 % by weight, or from about 5 % to 50 % by weight, or from about 5 % to about 40 % by weight, or from about 5 % to about 30 % by weight, or from about 5 % to about 25 % by weight, or from about 5 % to about 20 % by weight, or from about 5 % to about 15% by weight, or from about 10 % to about 30 % by weight, or from about 10 to about 25 % by weight, or from about 10 to about 20 % by weight, based on the total weight of the paint composition.

Binders are film-forming components of paint, which impart adhesion and bind the pigments together. Thus, the binder is any suitable material which is capable of binding the pigments together and providing adhesion to the substrate that is painted with the paint. The binder may be a natural and/or synthetic resin such as, for example, latex-based binders such as polymers and copolymers based on acrylics and/or vinyls, polyurethanes, polyesters, melamine resins, epoxies, and/or oils and other suitable monomeric species. In one embodiment, the binder comprises or consists of 100 % acrylic latex or polyvinyl acetate (PVA) latex. For oil-based paints, suitable binders include linseed oil, tung oil or alkyd resins.

The amount of binder in the paint composition will vary depending on the particular form of paint and its intended use. In an embodiment, the amount of binder is present in an amount of from about 5 % to about 30 % by weight, based on the total weight of the paint composition. For example, the amount of solvent may be from about 5 % to about 25 % by weight, or from about 5 % to about 20 % by weight, or from about 5 % to about 15% by weight, or from about 10 % to about 30 % by weight, or from about 10 to about 25 % by weight, or from about 10 to about 20 % by weight, based on the total weight of the paint composition.

The amounts of co-processed inorganic particulate material (when present), primary pigment and extender pigment (when present) in the paint composition is disclosed above.

*Other optional additives*

The mil-base and paint composition may include at least one further additive chosen from conventional additives, such as, for example, pigments other than those disclosed herein, surfactant, thickener, defoamer or anti-foamer, wetting agent, dispersant, biocide, pH adjustor, co-solvent, and antifreeze coalescent, as well as other functional additives. These additives may be included in any suitable amount, which will vary depending on the composition of the paint and relative amounts of pigment, solvent and binder. These amounts are readily determinable by a person skilled in the art. Generally, these additives may be included, on an individual basis, in the paint in an amount up to about 1 % by weight, based on the total weight of the fully formulated paint. Co-solvent may be present in an amount up to about 5 % by weight based on the total weight of the fully formulated paint composition, for example, up to about 4 % by weight, or up to about 3 % by weight, or up to about 2 % by weight.

Suitable dispersants include, for example, polyelectrolytes such as polyacrylates and copolymers containing polyacrylate species, especially polyacrylate salts (e.g., sodium and aluminium optionally with a group II metal salt), sodium hexametaphosphates, non-ionic polyol, polyphosphoric acid, condensed sodium phosphate, non-ionic surfactants, alkanolamine and other reagents commonly used for this function. The dispersant may, for example, be selected from conventional dispersant materials commonly used in the processing and grinding of inorganic particulate materials. Such dispersants will be well recognised by those skilled in this art. They are generally water-soluble salts capable of supplying anionic species which in their effective amounts can adsorb on the surface of the inorganic particles and thereby inhibit aggregation of the particles. The unsolvated salts suitably include alkali metal cations such as sodium. Solvation may in some cases be assisted by making the aqueous suspension slightly alkaline. Examples of suitable dispersants include: water soluble condensed phosphates, e.g., polymetaphosphate salts [general form of the sodium salts: $(NaPO_3)_x$] such as tetrasodium metaphosphate or so-called "sodium hexametaphosphate" (Graham's salt); water-soluble salts of polysilicic acids; polyelectrolytes; salts of homopolymers or copolymers of acrylic acid or methacrylic acid, or salts of polymers of other derivatives of acrylic acid, suitably having a weight average molecular mass of less than about 20,000.

Suitable anitfoamers and defoamers include, for example, blends of surfactants, tributyl phosphate, fatty polyoxyethylene esters plus fatty alcohols, fatty acid soaps, silicone emulsions and other silicone containing compositions, waxes and inorganic particulates in mineral oil, blends of emulsified hydrocarbons and other compounds sold commercially to carry out this function.

Suitable biocides include, for example, oxidizing biocides such as chlorine gas, chlorine dioxide gas, sodium hypochlorite, sodium hypobromite, hydrogen, peroxide, peracetic oxide, ammonium bromide/sodium hypochlorite, or non-oxidising biocides such as GLUT (Glutaraldehyde, CAS No 90045-36-6), ISO (CIT/MIT) (Isothiazolinone, CAS No 55956-84-9 & 96118-96-6), ISO (BIT/MIT) (Isothiazolinone), ISO (BIT) (Isothiazolinone, CAS No 2634-33-5), DBNPA, BNPD (Bronopol), NaOPP, CARBAMATE, THIONE (Dazomet),EDDM - dimethanol (O-formal), HT - Triazine (N-formal), THPS - tetrakis (O-formal), TMAD - diurea (N-formal), metaborate, sodium dodecylbenene sulphonate, thiocyanate, organosulphur, sodium benzoate and other compounds sold commercially for this function, e.g., the range of biocide polymers sold by Nalco.

The paint composition may further include dye. The distinction between powders which are pigments and those which are dyes is generally considered to be on the basis of solubility: pigments being insoluble and dispersed in the material, dyes being soluble or in solution when used.

*Paint properties*

The present inventors have unexpectedly found that microfibrillated cellulose, optionally co-processed in the presence of an inorganic particular material, may be used as a rheology modifier in a paint composition in addition to or in (partial) replacement of conventional rheology modifiers such as, for example, hydroxyethyl cellulose and the like, whilst maintaining or even improving the physical/mechanical, optical and post-application properties of the paint product. In embodiments, the use of microfibrillated cellulose, optionally co-processed in the presence of an inorganic particular material, in addition to or in partial or total replacement of conventional cellulose-derived rheology modifiers, such as, for example, hydroxyethyl cellulose and the like, maintains the paint viscosity (as may be determined in accordance with ISO 2884-1) at high shear rate (1/s), for example, a shear rate of at least about 100, but significantly increases paint viscosity at low shear rate, for example, a shear rate of no more than about 10. This may have the effect of improving the stability and drip-resistance of the paint whilst remaining easy to apply, e.g., brush or roller). Further, conventional cellulose-derived rheology modifiers such as hydroxyethyl cellulose and the like, are relatively more expensive to produce than the microfibrillated cellulose disclose herein. Thus, cost-savings may be achieved by using the microfibrillated cellulose disclosed herein in partial or total replacement of conventional cellulose-derived rheology modifiers, such as hydroxyethyl cellulose and the like.

According to some embodiments, dry paint film produced from the exemplary paints disclosed herein may exhibit desirable optical properties. For example, in some embodiments the use of microfibrillated cellulose, optionally co-processed in the presence of an inorganic particular material, in partial or total replacement of conventional cellulose-derived rheology modifiers, such as, for example, hydroxyethyl cellulose and the like, may improve one or more of the opacity (contrast ratio) of the dry film (determined in accordance with ISO 6504-1, ISO 6504-3 or ISO 2814), and the wet scrub resistance of the dry film (determined in accordance with ISO 11998). Further, the use of microfibrillated cellulose, optionally co-processed in the presence of an inorganic particular material, in partial or total replacement of conventional cellulose-derived rheology modifiers, such as, for example, hydroxyethyl cellulose and the like, may provide a significant reduction in gloss at 85° (determined in accordance with ISO 2813), which is important for a matt paint of this type.

In some embodiments, dry paint film obtained from the paint composition of the invention has a gloss at 85° of less than about 7.0, for example, less than about 6.5, or less than about 6.0, or less than about 5.5, or less than about 5.0.

In further embodiments, dry paint film obtained from the paint composition of the invention has a wet-scrub resistance of no more than about 45 µm, for example, no more than about 40 µm, or no more than about 35 µm, or no more than about 30.

In further embodiments, dry paint film obtained from the paint composition has a Burnish (at 85°) of less than about 5.8, for example, less than about 5.5, or less than about 5.0, or less than about 4.5. Typically, the burnish will be greater than about 1.0, for example, greater than about 2.0. In other words, an effect of including microfibrillated cellulose has the effect of reducing burnish. Burnish may be determined in accordance with the method described in the Examples below.

In further embodiments, dry paint film obtained from the paint composition has a mud cracking thickness of at least about 1,000 $\mu$m, for example, at least about 1050 $\mu$m, or at least about 1100 $\mu$m, or at least about 1150 $\mu$m. In other words, an effect of including microfibrillated cellulose has the effect of reducing the mud cracking propensity of the dry paint film. Mud cracking thickness may be determined in accordance with the method described in the Examples below.

*Preparative methods*

Certain embodiments of the mill-base and paint composition of the present invention may be prepared in accordance with conventional methods known in the art. This comprises combining, e.g., mixing, and processing mill-base and/or paint components in appropriate amounts (depending on the desired paint composition) and under suitable conditions to obtain a mill-base or paint composition. The mill-base and/or paint components may be processed by milling or in a high-speed dispersion tank in which the premixed components are subjected to high-speed agitation by a circular, toothed blade attached to a rotating shaft. The processed composition is then typically thinned by agitation with a suitable amount of solvent for the type of paint desired to produce the final paint product.

*Applications*

The paint composition of the present invention may be applied to a substrate, e.g., an article of manufacture which are many and various, (e.g., a handy-craft item, a piece of furniture, a vehicle or sea-going vessel, piping, and the like) or a surface, e.g., the surface of a constructional element (e.g., interior/exterior walls, ceilings and floors of a dwelling place, outside fencing and trimming, and the like).

Also provided is a canned paint comprising the paint composition of the second aspect of the invention. The term 'canned' is used herein to refer to any container suitable for paint, for example, a can, tub, bottle or pouch. The container may be formed from any material suitable for containing paint such as, for example, metal, plastic and glass. For the avoidance of doubt, the present application is directed to the subject-matter defined in the following numbered paragraphs:

1. A mill-base for paint, which comprises microfibrillated cellulose, wherein the microfibrillated cellulose is present in an amount ranging from about 0.1 % to about 10 % by weight based on the total weight of a paint composition formulated from said mill base.

2. A mill-base according to paragraph 1, further comprising co-processed inorganic particulate material as primary pigment and/or extender pigment, wherein said inorganic particulate material is co-processed with a fibrous substrate comprising cellulose during the preparation of said microfibrillated cellulose.

3. A mill-base according to paragraph 1 or 2, comprising primary pigment and/or extender pigment, other than the co-processed inorganic particulate material of clause 2.

4. A mill-base according to paragraph 1 or 3, wherein said microfibrillated cellulose is obtainable by a method comprising microfibrillating a fibrous substrate comprising cellulose in an aqueous environment by grinding in the presence of a grinding medium which is to be removed after the completion of grinding, wherein the grinding is carried out in the absence of grindable inorganic particulate material.

5. A mill-base according to paragraph 2 or 3, wherein said microfibrillated cellulose is obtainable by a method comprising microfibrillating a fibrous substrate comprising cellulose in an aqueous environment in the presence of said inorganic particulate material, optionally wherein the microfibrillating step comprises grinding the fibrous substrate comprising cellulose in the presence of the inorganic particulate material.

6. A mill-base according to paragraph 4 or 5, wherein the grinding is performed in a tower mill, screened grinder, stirred media mill or stirred media detritor.

7. A mill-base according to any preceding numbered paragraph comprising rheology modifier other than said microfibrillated cellulose.

8. A mill-base according to paragraph 7, wherein said rheology modifier is a cellulose-derived rheology modifier, for example, hydroxyethyl cellulose, hydroxymethyl cellulose, hydroxypropyl cellulose, hydroxypropylmethyl cellulose, carboxymethyl cellulose or a mixture thereof.

9. A mill-base according to paragraph 8, wherein the weight ratio of microfibrillated cellulose to said cellulose-derived rheology modifier is from about 1000:1 to about 1:4.

10. A mill-base according to any one of paragraphs 1-7, wherein said mill-base is free of cellulose-derived rheology modifier other than said microfibrillated cellulose.

11. A mill-base according to any on of paragraphs 1-10, comprising titanium dioxide as a primary pigment.

12. A mill-base according to any one of paragraphs 2-11, wherein said extender pigment is selected from one or more of an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite, feldspars, nepheline syenite, wollastonite, diatomaceous earth, barite, glass, and natural or synthetic silica or silicates

13. A mill-base according to any one of paragraphs 2-11, wherein said co-processed inorganic particulate material is selected from one or more of an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite, feldspars, nepheline syenite, wollastonite, diatomaceous earth, barite, glass, and natural or synthetic silica or silicates

14. A paint composition comprising microfibrillated cellulose, binder and solvent, wherein the microfibrillated cellulose is present in an amount ranging from about 0.1 % to about 10 % by weight based on the total weight of the paint composition.

15. The paint composition according to paragraph 14, which is formulated from the mill-based according to any one of paragraphs 1-13.

16. The paint composition according to paragraph 14 or 15, wherein the binder is a latex binder.

17. The paint composition according to any one of paragraphs 14-16, wherein the solvent is water.

18. The paint composition according to any one of paragraphs 14-17, wherein said paint is formulated for use as a decorative paint, for example, a matt paint.

19. A mill base or paint composition according to any preceding numbered paragraph, wherein said microfibrillated cellulose and optionally co-processed inorganic particulate material is provided in the form of an aqueous slurry or damp pressed cake.

20. Use of microfibrillated cellulose as defined in paragraph 4 and/or paragraph 5 as a rheology modifier in a-mill base for paint or a paint composition.

21. Use of microfibrillated cellulose as defined in paragraph 4 and/or paragraph 5 as a replacement or partial replacement for conventional cellulose-derived rheology modifier in a mill-base for paint or a paint composition.

22. Use according to paragraph 20, wherein said conventional cellulose-derived rheology modifier is selected from hydroxyethyl cellulose, hydroxymethyl cellulose, hydroxypropyl cellulose, hydroxypropylmethyl cellulose, carboxymethyl cellulose and mixtures thereof.

23. Use according to any one of paragraphs 20 -22 for one or more of:

    (i) increasing hiding power;
    (ii) increasing opacity (contrast ratio);
    (iii) reducing gloss at 85°; and
    (iv) improving wet scrub resistance.

24. A substrate coated with a paint composition according to any one of paragraphs 14-19.

25. The coated substrate of paragraph 23, wherein the substrate is an article of manufacture or the surface of one or more constructional elements.

26. The coated substrate of paragraph 25, wherein said constructional element is a wall or floor or ceiling.

27. The coated substrate of paragraph 25, wherein said constructional elements form the interior of a dwelling.

28. A canned paint comprising the paint composition according to any one of paragraphs 14-18.

Embodiments of the present invention will now be described by way of illustration only, with reference to the following examples.

EXAMPLES

*Example 1*

A series of paint formulations were mixed under high shear in which the standard hydroxyethyl cellulose component was progressively replaced by microfibrillated cellulose. Details of the formulations are shown in Table 1. The microfibrillated cellulose (MFC) sample was made by co-grinding a ground calcium carbonate having a $d_{50}$ of 1.4 $\mu$m with Botnia northerned bleached sulphate pulp in a stirred media mill at a specific energy of 2500 kWh/tonne of pulp. The MFC used in the paint formulation was provided in the form of an aqueous slurry comprising 2 % by weight microfibrillated cellulose and 8 % by weight ground calcium carbonate.

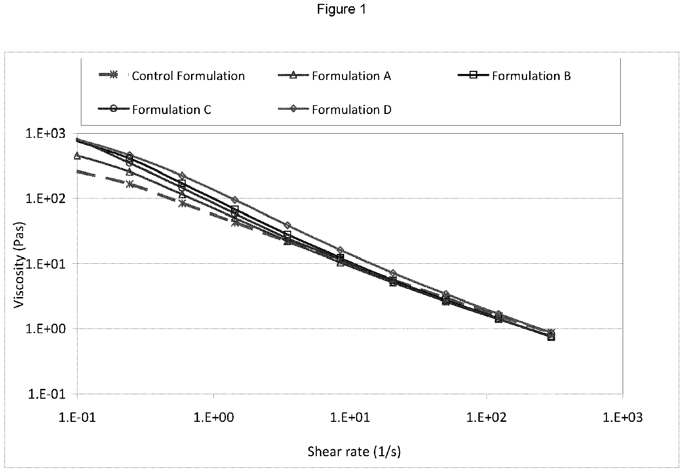

Figure 1 shows the rheology profiles (viscosity as a function of shear rate) of the formulations used. Replacement of the hydroxyethyl cellulose rheology modifier with microfibrillated cellulose prepared in accordance with the methods described herein maintains the paint viscosity at high shear rate approximately constant, but significantly increases viscosity at low shear rate. This will have the effect of making the paint more stable and drip-resistant whilst remaining easy to brush.

Table 1.

|  | Control | Formulation A | Formulation B | Formulation C | Formulation D |
|---|---|---|---|---|---|
| Rutile pigment coated with alumina ($TiO_2$ content - 94 %) | 10 | 10 | 10 | 10 | 10 |
| Refined kaolin having a dso of 0.7 $\mu$m | 10 | 10 | 10 | 10 | 10 |
| $CaCO_3$ having a $d_{50}$ of 2.6 $\mu$m | 18 | 18 | 18 | 18 | 18 |
| Talc having a $d_{50}$ of 9 $\mu$m | 6 | 6 | 6 | 6 | 6 |
| MFC (2% microfibrillated cellulose, 8% co-processed $CaCO_3$) | 0 | 5 | 10 | 15 | 20 |
| Natrosol 250MR (2% hydroxyethyl cellulose solution in water) | 20 | 15 | 10 | 5 | 0 |
| Defoamer (Dispelair CF24) | 0.3 | 0.3 | 0.3 | 0.3 | 0.3 |
| Dispersant (Dispex A40 and 10% Calgon) | 0.85 | 0.85 | 0.85 | 0.85 | 0.85 |
| Biocide (Acticide BX(N)) | 0.2 | 0.2 | 0.2 | 0.2 | 0.2 |
| pH adjustor (Ammonia 0.880) | 0.05 | 0.05 | 0.05 | 0.05 | 0.05 |
| Binder (PVA latex) | 14 | 14 | 14 | 14 | 14 |
| Rheology modifier (Acrysol TT935 diluted 1:2) | 2.25 | 2.25 | 2.25 | 2.25 | 2.25 |
| Water | 18.35 | 18.35 | 18.35 | 18.35 | 18.35 |

(continued)

|  | Control | Formulation A | Formulation B | Formulation C | Formulation D |
|---|---|---|---|---|---|
| Total | 100 | 100 | 100 | 100 | 100 |

Table 2 shows the properties of drawdown films of the paint formulations described in Table 1. Substitution of hydroxyethyl cellulose increases the light scattering coefficient of the film, thus improving its opacity and hiding power. It also results in a significant reduction in gloss at 85°, which is important for a matt paint. It can also be seen that the substitution results in an improvement in the wet scrub resistance of the paint, since the loss of film thickness in the standard scrubbing test used is lower for formulations containing microfibrillated cellulose prepared in accordance with the methods described herein. Opacity (contrast ratio) and hiding power (which is the spreading rate required to obtain a contrast ratio of 98%) were determined in accordance with ISO 6504-1. Gloss was determined in accordance with ISO 2813. Wet scrub resistance was determined in accordance with ISO 11998.

Table 2.

| Paint | Scattering Coefficient | Absorption Coefficient | Contrast Ratio at 20 m$^2$/l | Hiding Power V$_{0.98}$ | Gloss % | | | Wet Scrub Resistance |
|---|---|---|---|---|---|---|---|---|
|  | mm$^{-1}$ | mm$^{-1}$ | % | m$^2$/l | 20° | 60° | 85° | Average Loss in Film Thickness, $\mu$m |
| Control | 96.06 | 0.40 | 92.90 | 10.04 | 1.4 | 2.6 | 8.1 | 45 |
| Formulation A | 98.87 | 0.41 | 93.20 | 10.32 | 1.4 | 2.5 | 6.0 | 45 |
| Formulation B | 102.01 | 0.41 | 93.51 | 10.61 | 1.4 | 2.5 | 5.4 | not measured |
| Formulation C | 104.11 | 0.41 | 93.71 | 10.80 | 1.4 | 2.5 | 4.8 | 29 |
| Formulation D | 115.15 | 0.42 | 94.61 | 11.80 | 1.4 | 2.5 | 4.5 | 31 |

*Example 2*

A second series of paint formulations, this time with a portion of the talc replaced with a coarse calcium carbonate (having a d$_{50}$ of 6.5 $\mu$m, were mixed under high shear in which the standard hydroxyethyl cellulose component was progressively replaced by microfibrillated cellulose. Details of the formulations are shown in Table 3, and properties of the paint films in Tables 4a and 4b.

The mud cracking propensity of these paints was assessed by the drawdown of films which increase in thickness across their width, and recording of the film thickness in microns at which cracking after drying first appears. The higher the thickness at which cracking is observed, the lower is the tendency of the paint to give cracking problems in use.

Mud cracking was determined in the following manner:

*Materials and apparatus:*

- Substrate: gypsum plasterboard
- Wedge applicator (300 to 1500 $\mu$m wet film thickness)
- Series of bar applicators (1500, 1750, 2000, 2250 and 2500 $\mu$m wet film thickness)
- Ruler (0 to 300 mm)

*Procedure:*

- The paint is applied onto the plasterboard substrate (before Rotothinner analysis to eliminate further introduction of air into the paint) using either the wedge applicator or the series of bars or both if the approximate end result is not known. The applicator is slowly drawn down across the substrate to allow any air bubbles to disperse.

- The coatings are dried at 23°C +/- 2°C and 50% +/- 5% relative humidity and left for 24 hours. The plasterboard should be laid flat on a shelf or similar and left to reduce the risk of premature cracking.

*- measurement - wedge applicator*

- The result quoted is the point on the paint film where cracks appear within every 1 cm all the way down the film; a line should be drawn along the cracks. Cracks that have formed as a result of air bubbles should be excluded.

- The distance between the left hand edge of the film (300 $\mu$m edge) and the line is measured.

*- calculation of the result*

- As the distance between 300 $\mu$m and 1500 $\mu$m wet film thickness is 10 cm, the actual film thickness where the line is drawn can be calculated by:

*Mud Crack (µm) = (Distance of line from 300 µm thickness (cm) x 120) + 300*

*- measurement - bar applicators*

- Record the thinnest wet film thickness that shows evidence of mud cracking (excluding any cracking caused as a result of air bubbles) as the final result.

The mud crack results present below were determined in accordance with the wedge applicator measurement.
The propensity of these paint films to burnish - i.e., to increase in gloss when rubbed - was also determined, and the results recorded as the increase in 85° gloss after 50 rubbing cycles.
Burnish was determined in the following manner.

*Materials and apparatus:*

- Substrate: glass panel, 4mm thick, dimensions 30 cm x 10 cm

- Block applicator with a gap of 100$\mu$m

- Erichsen Automatic Film Applicator (509 mk111)

- Glossmeter: Sheen Tri Glossmaster 20/60/85°

- Erichsen Scrub Tester

- Sponge holder, stainless steel, weight 360g

- Sponge pad plus abrasive pad

- Cloth, similar to J cloth

*Procedure:*

- The test film is applied onto the glass substrate using the Erichsen automatic applicator.

- The coated panel is dried at 23°C +/- 2°C and 50% +/- 5% relative humidity and left for 24 hours.

- The gloss is measured (normally at 85°; 5 separate areas down the length of the panel, quoting the average value). This is the 'initial gloss'.

- The glass panel is placed on the scrub tester and secured.

- The cloth is wrapped around the sponge pad and abrasive pad and placed into the sponge holder, ensuring that the pad/cloth is protruding approximately 5 mm out of the bottom of the sponge holder.

- The sponge holder is secured on top of the glass panel with the cloth in contact with the paint film.

- The paint film is rubbed/scrubbed for 50 cycles.

- The gloss over the area rubbed by the cloth is re-measured (in the same manner as the initial gloss. The re-measured gloss is the 'final gloss'.

- The burnish result quoted is the increase in gloss (final gloss - initial gloss).

A new piece of cloth should be used for each rubbing, The same side of the cloth should be used each time. If the cloth has a noticeable pile this should always be placed around the sponge so that the pile will rub in the same direction.

Table 3.

| | Control 2 | Formulation E | Formulation F | Formulation G |
|---|---|---|---|---|
| Rutile pigment coated with alumina ($TiO_2$ content - 94 %) | 10 | 10 | 10 | 10 |
| Refined kaolin having a dso of 0.7 $\mu$m | 10 | 10 | 10 | 10 |
| $CaCO_3$ having a $d_{50}$ of 2.6 $\mu$m | 18 | 18 | 18 | 18 |
| $CaCO_3$ having a $d_{50}$ of 6.5 $\mu$m | 4 | 4 | 4 | 4 |
| Talc having a dso of 9 $\mu$m | 2 | 2 | 2 | 2 |
| MFC (2% microfibrillated cellulose, 8% co-processed $CaCO_3$) | 0 | 5 | 10 | 15 |
| Natrosol 250MR (2% hydroxyethyl cellulose solution in water) | 20 | 15 | 10 | 5 |
| Defoamer (Dispelair CF24) | 0.3 | 0.3 | 0.3 | 0.3 |
| Dispersant (Dispex A40 and 10% Calgon) | 0.85 | 0.85 | 0.85 | 0.85 |
| Biocide (Acticide BX(N)) | 0.2 | 0.2 | 0.2 | 0.2 |
| pH adjustor (Ammonia 0.880) | 0.05 | 0.05 | 0.05 | 0.05 |
| Binder (PVA latex) | 14 | 14 | 14 | 14 |
| Rheology modifier (Acrysol TT935 diluted 1:2) | 2.25 | 2.25 | 2.25 | 2.25 |

(continued)

|  | Control 2 | Formulation E | Formulation F | Formulation G |
|---|---|---|---|---|
| Water | 18.35 | 18.35 | 18.35 | 18.35 |
| Total | 100 | 100 | 100 | 100 |

Table 4a.

| Paint | Scattering Coefficient | Absorption Coefficient | Contrast Ratio at 20m²/l | Hiding Power $V_{0.98}$ | Gloss % | | |
|---|---|---|---|---|---|---|---|
|  | mm⁻¹ | mm⁻¹ | % | m²/l | 20° | 60° | 85° |
| Control 2 | 74.59 | 0.32 | 89.73 | 7.82 | 1.4 | 2.5 | 7 |
| Formulation E | 75.62 | 0.32 | 89.93 | 7.94 | 1.4 | 2.5 | 6.0 |
| Formulation F | 77.38 | 0.32 | 90.23 | 8.10 | 1.4 | 2.5 | 5.2 |
| Formulation G | 81.10 | 0.34 | 90.86 | 8.48 | 1.4 | 2.5 | 4.7 |

Table 4b.

| Paint | Mudcrack | Burnish Resistance |
|---|---|---|
|  | μm | Difference in 85 degree gloss |
| Control 2 | 940 | 6 |
| Formulation E | 910 | 5.3 |
| Formulation F | 1100 | 4.7 |
| Formulation G | 1190 | 4.4 |

Example 3

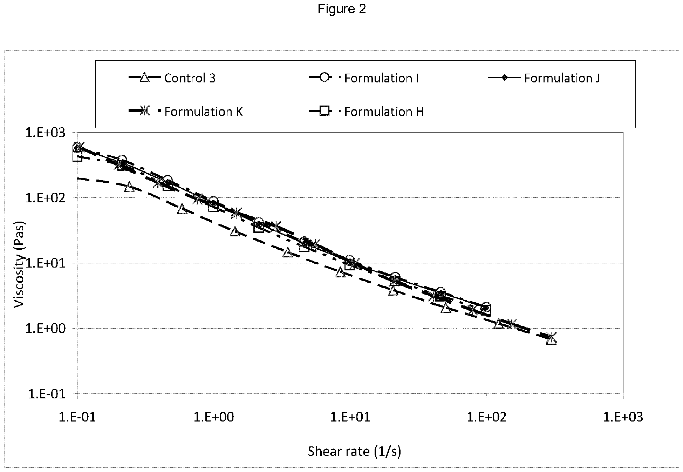

The sample of microfibrillated cellulose from Example 1 was diluted to 2.5 wt% total solids and passed once through a GEA Niro Soavi homogeniser (model: Pony NS2006L) at 500 bar pressure. The product from the homogenizer was then concentrated back to 10% solids (2% microfibrillated cellulose) by centrifuge and used progressively to substitute hydroxyethyl cellulose in the equivalent formulation as used in Example 2. Formulation details are provided in Table 5.
The optical properties of the paint films made from these formulations are summarized in Table 6. As can be seen, the further treatment leads to a greater enhancement of the light scattering and, thus, opacity of the paint. Rheology profiles are shown in Figure 2 - again the microfibrillated cellulose enhances the viscosity of the formulation at low shear.

Table 5.

|  | Control 3 | Formulation H | Formulation I | Formulation J | Formulation K |
|---|---|---|---|---|---|
| Rutile pigment coated with alumina (TiO₂ content - 94 %) | 10 | 10 | 10 | 10 | 10 |
| Refined kaolin having a $d_{50}$ of 0.7 μm | 10 | 10 | 10 | 10 | 10 |
| CaCO₃ having a dso of 2.6 μm | 18 | 18 | 18 | 18 | 18 |
| CaCO₃ having a dso of 6.5 μm | 4 | 4 | 4 | 4 | 4 |
| Talc having a dso of 9 μm | 2 | 2 | 2 | 2 | 2 |

(continued)

|  | Control 3 | Formulation H | Formulation I | Formulation J | Formulation K |
|---|---|---|---|---|---|
| MFC (2% microfibrillated cellulose, 8% co-processed $CaCO_3$) | 0 | 5 | 10 | 15 | 20 |
| Natrosol 250MR (2% hydroxyethyl cellulose solution in water) | 20 | 15 | 10 | 5 | 0 |
| Defoamer (Dispelair CF24) | 0.3 | 0.3 | 0.3 | 0.3 | 0.3 |
| Dispersant (Dispex A40 and 10% Calgon) | 0.85 | 0.85 | 0.85 | 0.85 | 0.85 |
| Biocide (Acticide BX(N)) | 0.2 | 0.2 | 0.2 | 0.2 | 0.2 |
| pH adjustor (Ammonia 0.880) | 0.05 | 0.05 | 0.05 | 0.05 | 0.05 |
| Binder (PVA latex) | 14 | 14 | 14 | 14 | 14 |
| Rheology modifier (Acrysol TT935 diluted 1:2) | 2.25 | 2.25 | 2.25 | 2.25 | 2.25 |
| Water | 18.35 | 18.35 | 18.35 | 18.35 | 18.35 |
| Total | 100 | 100 | 100 | 100 | 100 |

Table 6.

| Paint | Scattering Coefficient | Absorption Coefficient | Contrast Ratio at $20m^2/l$ | Hiding Power $V_{0.98}$ | Gloss % | | |
|---|---|---|---|---|---|---|---|
|  | $mm^{-1}$ | $mm^{-1}$ | % | $m^2/l$ | 20° | 60° | 85° |
| Control 3 | 77.52 | 0.35 | 90.30 | 8.19 | 1.3 | 2.4 | 5.1 |
| Formulation H | 91.96 | 0.36 | 92.36 | 9.51 | 1.4 | 2.4 | 5.6 |
| Formulation I | 97.96 | 0.36 | 93.03 | 10.07 | 1.4 | 2.5 | 5.4 |
| Formulation J | 97.46 | 0.36 | 92.98 | 10.02 | 1.4 | 2.4 | 5.2 |
| Formulation K | 94.69 | 0.37 | 92.70 | 9.81 | 1.4 | 2.4 | 4.7 |

The present invention provides the following embodiments:

Embodiment 1. A mill-base for paint, which comprises microfibrillated cellulose, wherein the microfibrillated cellulose is present in an amount ranging from about 0.1 % to about 10 % by weight based on the total weight of a paint composition formulated from said mill base, optionally further comprising co-processed inorganic particulate material as primary pigment and/or extender pigment, wherein said inorganic particulate material is co-processed with a fibrous substrate comprising cellulose during the preparation of said microfibrillated cellulose.

Embodiment 2. A mill-base according to embodiment 1, comprising primary pigment and/or extender pigment, other than the co-processed inorganic particulate material of embodiment 1.

Embodiment 3. A mill-base according to embodiment 1 or 2, wherein said microfibrillated cellulose is obtainable by a method comprising microfibrillating a fibrous substrate comprising cellulose in an aqueous environment by grinding in the presence of a grinding medium which is to be removed after the completion of grinding, wherein the grinding is carried out in the absence of grindable inorganic particulate material; or wherein said microfibrillated cellulose is obtainable by a method comprising microfibrillating a fibrous substrate comprising cellulose in an aqueous environment in the presence of said inorganic particulate material, optionally wherein the microfibrillating step comprises grinding the fibrous substrate comprising cellulose in the presence of the inorganic particulate material.

Embodiment 4. A mill based according to embodiment 3, wherein the microfibrillated cellulose obtained, optionally including inorganic particulate material, is further treated in a homogenizer under wet conditions.

Embodiment 5. A mill-base according to embodiment 3 or 4, wherein the grinding is performed in a tower mill, screened grinder, stirred media mill or stirred media detritor.

Embodiment 6. A mill-base according to any preceding embodiment comprising rheology modifier other than said microfibrillated cellulose, optionally wherein said rheology modifier is a cellulose-derived rheology modifier, for example, hydroxyethyl cellulose, hydroxymethyl cellulose, hydroxypropyl cellulose, hydroxypropylmethyl cellulose, carboxymethyl cellulose or a mixture thereof, and optionally wherein the weight ratio of microfibrillated cellulose to said cellulose-derived rheology modifier is from about 1000:1 to about 1:4.

Embodiment 7. A mill-base according to any one of embodiments 1-5, wherein said mill-base is free of cellulose-derived rheology modifier other than said microfibrillated cellulose.

Embodiment 8. A mill-base according to any one of embodiments 1-7, comprising titanium dioxide as a primary pigment.

Embodiment 9. A mill-base according to any one of embodiments 1-8, wherein said extender pigment is selected from one or more of an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite, feldspars, nepheline syenite, wollastonite, diatomaceous earth, barite, glass, and natural or synthetic silica or silicates

Embodiment 10. A mill-base according to any one of embodiments 2-8, wherein said co-processed inorganic particulate material is selected from one or more of an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite, feldspars, nepheline syenite, wollastonite, diatomaceous earth, barite, glass, and natural or synthetic silica or silicates

Embodiment 11. A paint composition comprising microfibrillated cellulose, binder and solvent, wherein the microfibrillated cellulose is present in an amount ranging from about 0.1 % to about 10 % by weight based on the total weight of the paint composition.

Embodiment 12. The paint composition according to embodiment 11, which is formulated from the mill-base according to any one of embodiments 1-10.

Embodiment 13. The paint composition according to embodiment 11 or 12, wherein the binder is a latex binder, optionally wherein the solvent is water.

Embodiment 14. The paint composition according to any one of embodiments 11-13, wherein said paint is formulated for use as a decorative paint, for example, a matt paint.

Embodiment 15. A mill base or paint composition according to any preceding embodiment, wherein said microfibrillated cellulose and optionally co-processed inorganic particulate material is provided in the form of an aqueous slurry or damp pressed cake.

Embodiment 16. Use of microfibrillated cellulose as defined in embodiment 3 or 4 as a rheology modifier in a-mill base for paint or a paint composition.

Embodiment 17. Use of microfibrillated cellulose as defined in embodiment 3 or 4 as a replacement or partial replacement for conventional cellulose-derived rheology modifier in a mill-base for paint or a paint composition, optionally wherein said conventional cellulose-derived rheology modifier is selected from hydroxyethyl cellulose, hydroxymethyl cellulose, hydroxypropyl cellulose, hydroxypropylmethyl cellulose, carboxymethyl cellulose and mixtures thereof.

Embodiment 18. Use according to any one of embodiments 16-17 for one or more of:

    (i) increasing hiding power;
    (ii) increasing opacity (contrast ratio);
    (iii) reducing gloss at 85°;
    (iv) improving wet scrub resistance;
    (v) reducing mud cracking propensity; and
    (vi) reducing burnish.

Embodiment 19. A substrate coated with a paint composition according to any one of embodiments 11-15, optionally wherein the substrate is an article of manufacture or the surface of one or more constructional elements, optionally wherein said constructional element(s) is a wall or floor or ceiling or form the interior of a dwelling.

Embodiment 20. A canned paint comprising the paint composition according to any one of embodiments 11-15.

**Claims**

1. A paint composition with improved rheology comprising microfibrillated cellulose, binder and solvent, wherein the microfibrillated cellulose is present in an amount ranging from 0.1 % to 10 % by weight based on the total weight of the paint composition, and which is formulated from a mill-base composition comprising microfibrillated cellulose and co-processed inorganic particulate material as primary pigment and/or extender pigment, wherein said inorganic particulate material is co-processed with a fibrous substrate comprising cellulose during the preparation of said microfibrillated cellulose, further comprising primary pigment and/or extender pigment other than the co-processed inorganic particulate material, wherein the microfibrillated cellulose has a $d_{50}$ ranging from about 5 $\mu$m to about 500 $\mu$m, as measured by laser light scattering, and wherein the microfibrillated cellulose has a fibre steepness 100*$d_{30}$/$d_{70}$ of from 20 to 50.

2. The paint composition according to claim 1, wherein a cellulose-derived rheology modifier other than the microfibrillated cellulose is present in a weight ratio of the microfibrillated cellulose to the cellulose-derived rheology modifier other than the microfibrillated cellulose from about oo to about 1000:1.

3. The paint composition according to claim 1 or 2, wherein the composition is free from a cellulose-derived rheology modifier other than the microfibrillated cellulose.

4. The paint composition according to any of the claims 1 to 3, wherein the binder is a latex binder, optionally wherein the solvent is water.

5. The paint composition according to any of the claims 1 to 4, wherein the solvent comprises water or an organic solvent, wherein the solvent is present in an amount of about 5% to about 90% by weight.

6. The paint composition according to any one of claims 1 to 6, wherein said paint is formulated for use as a decorative paint, for example, a matt paint.

7. The paint composition according to any one of claims 1 to 7, wherein the extender pigment is one or more of, kaolin, calcium carbonate and talc.

8. A substrate coated with a paint composition according to any one of claims 1 to 6, optionally wherein the substrate is an article of manufacture or the surface of one or more constructional elements, optionally wherein said constructional element(s) is a wall or floor or ceiling or form the interior of a dwelling.

9. A canned paint comprising the paint composition according to any one of claims 1 to 7.

10. A method of making a paint composition, the method comprising:

   microfibrillating a fibrous substrate comprising cellulose in an aqueous environment in the presence of an inorganic particulate material to obtain microfibrillated cellulose having a fibre steepness of from 20 to 50 and co-processed inorganic particulate material, optionally wherein the microfibrillating step comprises grinding the fibrous substrate comprising cellulose in the presence of the inorganic particulate material, and
   combining said microfibrillated cellulose having a fibre steepness 100*$d_{30}$/$d_{70}$ of from 20 to 50 and co-processed inorganic particulate material as primary pigment and/or extender pigment with binder, solvent and primary pigment and/or extender pigment other than the co-processed inorganic particulate material in suitable amounts to obtain a paint composition wherein the microfibrillated cellulose is present in an amount ranging from 0.1 % to 10 % by weight based on the total weight of the paint composition,
   optionally wherein the grinding is performed in a tower mill, screened grinder, stirred media mill or stirred media detritor, optionally wherein the microfibrillated cellulose obtained, including inorganic particulate material, is further treated in a homogenizer under wet conditions.

Figure 1

Figure 2

Europäisches
Patentamt

European
Patent Office

Office européen
des brevets

## EUROPEAN SEARCH REPORT

Application Number

EP 20 21 3646

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2010/131016 A2 (IMERYS MINERALS LTD [GB]; HUSBAND JOHN CLAUDE [GB]; SVENDING PER [SE];) 18 November 2010 (2010-11-18) * page 13, line 19 - page 14, line 4; claims 62,63; examples 14-16,21,22; tables 7, 9,10 * * page 28, lines 19-22, 30-35 * | 1-10 | INV. C09D5/04 C09D7/43 C09D7/61 C09D101/02 C09D101/28 C09D17/00 |
| A | WO 2010/105847 A1 (BORREGAARD IND [NO]; HOLTAN SYNNOVE [NO]; HANSEN MICHAEL [NO]; OVREBO) 23 September 2010 (2010-09-23) * page 24, lines 1-15; claims 1-4,10-13; example all * * page 6, line 19 - page 16, line 13 * | 1-10 | |
| A | US 4 487 634 A (TURBAK ALBIN F [US] ET AL) 11 December 1984 (1984-12-11) * column 2, lines 10-28; claims 1,2; examples 3-7,19; table I * | 1-10 | |
| A | US 6 183 596 B1 (MATSUDA YUJI [JP] ET AL) 6 February 2001 (2001-02-06) * column 10, lines 8-23; examples 5,6; table 3 * | 1-10 | TECHNICAL FIELDS SEARCHED (IPC) C09D |
| A | US 5 964 983 A (DINAND ELISABETH [FR] ET AL) 12 October 1999 (1999-10-12) * column 7, lines 18-38 * * column 8, lines 26-33 * * column 3, lines 22-65 * | 1-10 | |
| A | WO 2011/141876 A1 (STORA ENSO OYJ [FI]; HEISKANEN ISTO [FI]; BACKFOLK KAJ [FI]) 17 November 2011 (2011-11-17) * page 5, line 22 - page 6, line 5; claims 2,6-8,10; example 2 * * page 8, line 25 - page 9, line 29 * * page 10, line 24 * | 1-10 | |

-/--

The present search report has been drawn up for all claims

| Place of search | Date of completion of the search | Examiner |
|---|---|---|
| Munich | 12 April 2021 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 21 3646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 236 545 A1 (OMYA DEVELOPMENT AG [CH]) 6 October 2010 (2010-10-06) * paragraphs [0051] - [0073]; claims 4-6,14-17; example all; tables 1,2 * * paragraphs [0022] - [0024], [0031] - [0033], [0038], [0047], [0048] * ----- | 1-10 | |
| X,P | WO 2012/066308 A2 (IMERYS MINERALS LTD [GB]; HUSBAND JOHN CLAUDE [GB] ET AL.) 24 May 2012 (2012-05-24) * examples 1,2,4,5,; tables 1,3 * ----- | 1-10 | |

| | TECHNICAL FIELDS SEARCHED (IPC) |
|---|---|

The present search report has been drawn up for all claims

| Place of search | Date of completion of the search | Examiner |
|---|---|---|
| Munich | 12 April 2021 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
### ON EUROPEAN PATENT APPLICATION NO.

EP 20 21 3646

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2021

| Patent document cited in search report | Publication date | Patent family member(s) | Publication date |
|---|---|---|---|
| WO 2010131016 A2 | 18-11-2010 | AU 2010247184 A1 | 18-11-2010 |
| | | BR PI1003638 A2 | 22-11-2016 |
| | | BR 122020002262 B1 | 17-11-2020 |
| | | CA 2748137 A1 | 18-11-2010 |
| | | CN 102753752 A | 24-10-2012 |
| | | CN 105332306 A | 17-02-2016 |
| | | DK 2557225 T3 | 18-07-2016 |
| | | EP 2350387 A2 | 03-08-2011 |
| | | EP 2557225 A1 | 13-02-2013 |
| | | EP 3040475 A2 | 06-07-2016 |
| | | EP 3715528 A1 | 30-09-2020 |
| | | ES 2535645 T3 | 13-05-2015 |
| | | JP 5572169 B2 | 13-08-2014 |
| | | JP 6400797 B2 | 03-10-2018 |
| | | JP 6422931 B2 | 14-11-2018 |
| | | JP 6736626 B2 | 05-08-2020 |
| | | JP 2012514137 A | 21-06-2012 |
| | | JP 2014198930 A | 23-10-2014 |
| | | JP 2017048497 A | 09-03-2017 |
| | | JP 2017166118 A | 21-09-2017 |
| | | JP 2018188793 A | 29-11-2018 |
| | | JP 2020079476 A | 28-05-2020 |
| | | JP 2020176370 A | 29-10-2020 |
| | | KR 20110091025 A | 10-08-2011 |
| | | KR 20130023398 A | 07-03-2013 |
| | | KR 20150126727 A | 12-11-2015 |
| | | PL 2350387 T3 | 31-07-2015 |
| | | PT 2350387 E | 19-05-2015 |
| | | RU 2011139570 A | 20-06-2013 |
| | | TW 201544655 A | 01-12-2015 |
| | | US 2011259537 A1 | 27-10-2011 |
| | | US 2012012031 A1 | 19-01-2012 |
| | | US 2016053437 A1 | 25-02-2016 |
| | | US 2018371694 A1 | 27-12-2018 |
| | | US 2019078257 A1 | 14-03-2019 |
| | | WO 2010131016 A2 | 18-11-2010 |
| | | ZA 201104857 B | 31-08-2011 |
| WO 2010105847 A1 | 23-09-2010 | BR PI1012368 A2 | 29-03-2016 |
| | | CN 102361924 A | 22-02-2012 |
| | | EP 2408857 A1 | 25-01-2012 |
| | | ES 2665029 T3 | 24-04-2018 |
| | | JP 2012520911 A | 10-09-2012 |
| | | PL 2408857 T3 | 31-08-2018 |
| | | US 2012100367 A1 | 26-04-2012 |
| | | WO 2010105847 A1 | 23-09-2010 |

EPO FORM P0459

For more details about this annex : see Official Journal of the European Patent Office, No. 12/82

page 1 of 4

## ANNEX TO THE EUROPEAN SEARCH REPORT
## ON EUROPEAN PATENT APPLICATION NO.

EP 20 21 3646

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2021

| Patent document cited in search report | Publication date | Patent family member(s) | Publication date |
|---|---|---|---|
| US 4487634 A | 11-12-1984 | NONE | |
| US 6183596 B1 | 06-02-2001 | US 6183596 B1<br>US 6214163 B1 | 06-02-2001<br>10-04-2001 |
| US 5964983 A | 12-10-1999 | AT 215638 T<br>BR 9607594 A<br>CA 2209790 A1<br>CN 1173904 A<br>DE 69620280 T2<br>EP 0726356 A1<br>ES 2175046 T3<br>FR 2730252 A1<br>JP 3042892 B2<br>JP H11501684 A<br>KR 19980701935 A<br>US 5964983 A<br>WO 9624720 A1 | 15-04-2002<br>07-07-1998<br>15-08-1996<br>18-02-1998<br>07-11-2002<br>14-08-1996<br>16-11-2002<br>09-08-1996<br>22-05-2000<br>09-02-1999<br>25-06-1998<br>12-10-1999<br>15-08-1996 |
| WO 2011141876 A1 | 17-11-2011 | AU 2011251675 A1<br>BR 112012028843 A2<br>CA 2797927 A1<br>CN 103003376 A<br>CN 107236370 A<br>EP 2569381 A1<br>JP 5850919 B2<br>JP 2013527876 A<br>KR 20130062946 A<br>PL 2569381 T3<br>SE 1050471 A1<br>US 2013047893 A1<br>WO 2011141876 A1 | 29-11-2012<br>26-07-2016<br>17-11-2011<br>27-03-2013<br>10-10-2017<br>20-03-2013<br>03-02-2016<br>04-07-2013<br>13-06-2013<br>31-03-2020<br>13-11-2011<br>28-02-2013<br>17-11-2011 |
| EP 2236545 A1 | 06-10-2010 | AR 075961 A1<br>BR PI1012691 A2<br>CA 2755495 A1<br>CL 2010000280 A1<br>CN 102378777 A<br>CO 6501176 A2<br>DK 2236545 T3<br>DK 2414435 T3<br>DK 2805986 T3<br>DK 3312217 T3<br>DK 3567069 T3<br>EP 2236545 A1 | 11-05-2011<br>29-03-2016<br>14-10-2010<br>11-03-2011<br>14-03-2012<br>15-08-2012<br>01-12-2014<br>30-10-2017<br>18-12-2017<br>01-07-2019<br>30-11-2020<br>06-10-2010 |

For more details about this annex : see Official Journal of the European Patent Office, No. 12/82

page 2 of 4

**ANNEX TO THE EUROPEAN SEARCH REPORT
ON EUROPEAN PATENT APPLICATION NO.**                EP 20 21 3646

12-04-2021

| Patent document cited in search report | Publication date | Patent family member(s) | Publication date |
|---|---|---|---|
| | | EP 2414435 A1 | 08-02-2012 |
| | | EP 2805986 A1 | 26-11-2014 |
| | | EP 3312217 A1 | 25-04-2018 |
| | | EP 3567069 A1 | 13-11-2019 |
| | | EP 3795612 A1 | 24-03-2021 |
| | | ES 2524090 T3 | 03-12-2014 |
| | | ES 2643032 T3 | 21-11-2017 |
| | | ES 2650373 T3 | 18-01-2018 |
| | | ES 2739832 T3 | 04-02-2020 |
| | | HR P20171405 T1 | 17-11-2017 |
| | | HR P20171818 T1 | 09-02-2018 |
| | | HU E034621 T2 | 28-02-2018 |
| | | HU E035151 T2 | 02-05-2018 |
| | | JP 5894525 B2 | 30-03-2016 |
| | | JP 6257049 B2 | 10-01-2018 |
| | | JP 6480549 B2 | 13-03-2019 |
| | | JP 6651661 B2 | 19-02-2020 |
| | | JP 6698236 B1 | 27-05-2020 |
| | | JP 2012522093 A | 20-09-2012 |
| | | JP 2016065348 A | 28-04-2016 |
| | | JP 2018076514 A | 17-05-2018 |
| | | JP 2019108549 A | 04-07-2019 |
| | | JP 2020079402 A | 28-05-2020 |
| | | JP 2020100831 A | 02-07-2020 |
| | | KR 20110133619 A | 13-12-2011 |
| | | KR 20160128460 A | 07-11-2016 |
| | | NO 2805986 T3 | 07-04-2018 |
| | | PL 2236545 T3 | 27-02-2015 |
| | | PL 2414435 T3 | 29-12-2017 |
| | | PL 2805986 T3 | 28-02-2018 |
| | | PL 3312217 T3 | 30-09-2019 |
| | | PT 2236545 E | 06-11-2014 |
| | | PT 2414435 T | 20-10-2017 |
| | | PT 2805986 T | 19-12-2017 |
| | | RU 2011143854 A | 10-05-2013 |
| | | RU 2014130594 A | 10-02-2016 |
| | | SI 2236545 T1 | 31-12-2014 |
| | | SI 2414435 T1 | 29-12-2017 |
| | | SI 2805986 T1 | 30-04-2018 |
| | | TR 201909766 T4 | 22-07-2019 |
| | | TW 201038631 A | 01-11-2010 |
| | | TW 201540753 A | 01-11-2015 |
| | | UA 108609 C2 | 25-05-2015 |
| | | US 2012107480 A1 | 03-05-2012 |
| | | US 2014370179 A1 | 18-12-2014 |
| | | US 2019276672 A1 | 12-09-2019 |

EPO FORM P0459

page 3 of 4

## ANNEX TO THE EUROPEAN SEARCH REPORT
## ON EUROPEAN PATENT APPLICATION NO.

EP 20 21 3646

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2021

| Patent document cited in search report | Publication date | Patent family member(s) | Publication date |
|---|---|---|---|
| | | UY 32532 A | 29-10-2010 |
| | | WO 2010115785 A1 | 14-10-2010 |
| WO 2012066308 A2 | 24-05-2012 | AU 2011330981 A1 | 02-05-2013 |
| | | AU 2016202328 A1 | 05-05-2016 |
| | | BR 112013011629 A2 | 16-08-2016 |
| | | CA 2817635 A1 | 24-05-2012 |
| | | CN 103210144 A | 17-07-2013 |
| | | DK 2640893 T3 | 25-09-2017 |
| | | EP 2640893 A2 | 25-09-2013 |
| | | EP 3263765 A1 | 03-01-2018 |
| | | ES 2641064 T3 | 07-11-2017 |
| | | HK 1243746 A1 | 20-07-2018 |
| | | HR P20171343 T1 | 29-12-2017 |
| | | HU E036336 T2 | 30-07-2018 |
| | | JP 6410883 B2 | 24-10-2018 |
| | | JP 6599081 B2 | 30-10-2019 |
| | | JP 6723304 B2 | 15-07-2020 |
| | | JP 2014503696 A | 13-02-2014 |
| | | JP 2017203243 A | 16-11-2017 |
| | | JP 2019035186 A | 07-03-2019 |
| | | JP 2020169434 A | 15-10-2020 |
| | | KR 20130096755 A | 30-08-2013 |
| | | KR 20190025748 A | 11-03-2019 |
| | | KR 20200087280 A | 20-07-2020 |
| | | PL 2640893 T3 | 29-12-2017 |
| | | PT 2640893 T | 02-10-2017 |
| | | SI 2640893 T1 | 30-11-2017 |
| | | TW 201241268 A | 16-10-2012 |
| | | US 2013280545 A1 | 24-10-2013 |
| | | US 2016230341 A1 | 11-08-2016 |
| | | US 2019177919 A1 | 13-06-2019 |
| | | WO 2012066308 A2 | 24-05-2012 |

EPO FORM P0459

For more details about this annex : see Official Journal of the European Patent Office, No. 12/82

page 4 of 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010131016 A
- US 5576617 A

- EP 614948 A


**Non-patent literature cited in the description**

- Paper Coating Pigments. *TAPPI Monograph Series No 30,* 34-35
- *CHEMICAL ABSTRACTS,* 90045-36-6

- *CHEMICAL ABSTRACTS,* 55956-84-9
- *CHEMICAL ABSTRACTS,* 2634-33-5